(19) Europäisches Patentamt / European Patent Office / Office européen des brevets

(11) **EP 3 775 766 B1**

(12) **EUROPEAN PATENT SPECIFICATION**

(45) Date of publication and mention
of the grant of the patent:
**06.08.2025 Bulletin 2025/32**

(21) Application number: **19717563.1**

(22) Date of filing: **04.04.2019**

(51) International Patent Classification (IPC):
**G01B 11/25** *(2006.01)*

(52) Cooperative Patent Classification (CPC):
**G01B 11/2513; G01B 1/00; G01B 11/2527;
G01B 11/2545**

(86) International application number:
**PCT/GB2019/050965**

(87) International publication number:
**WO 2019/193337 (10.10.2019 Gazette 2019/41)**

(54) **APPARATUS AND METHODS FOR 3D SENSING**

VORRICHTUNG UND VERFAHREN ZUM 3D-MESSEN

APPAREILS ET PROCÉDÉS DE DÉTECTION 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.04.2018 GB 201805558
30.05.2018 GB 201808804**

(43) Date of publication of application:
**17.02.2021 Bulletin 2021/07**

(73) Proprietor: **Cambridge Mechatronics Limited
Cambridge CB4 0WG (GB)**

(72) Inventors:
• **RICHARDS, David Charles William
Cambridge, Cambridgeshire CB4 1YG (GB)**

• **CARR, Joshua
Cambridge, Cambridgeshire CB4 1YG (GB)**
• **HOWARTH, James
Cambridge, Cambridgeshire CB4 1YG (GB)**

(74) Representative: **Cambridge Mechatronics Limited
IP Department
306 Cambridge Science Park
Milton Road
Cambridge, Cambridgeshire CB4 0WG (GB)**

(56) References cited:
KR-B1- 101 738 433     US-A1- 2014 104 416
US-A1- 2015 160 003     US-A1- 2017 142 406
US-A1- 2018 063 438     US-B1- 9 843 689

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 775 766 B1

**Description**

The present application generally relates to apparatus and methods for generating a three-dimensional (3D) representation of a scene (also known as 3D sensing) and in particular to techniques for controlling the position and/or orientation of one or more components of an apparatus used for generating a 3D representation.

US2014/104416A discloses a method for determining the dimensions of an object comprises projecting a laser pattern onto an object, capturing an image of the projected pattern on the object, and determining the dimensions of the object-based, at least in part, on the captured image. US9843689B discloses a mobile device for projecting images on a surface and for maintaining a position of the image on the surface. US2017/142406A discloses an apparatus including a light source configured to project light in a changing pattern that reduces the light's noticeability; collection optics through which light passes and forms an epipolar plane with the light source; and an image sensor configured to receive light passed through the collection optics to acquire image information and depth information simultaneously. KR 101 738 433 B1 discloses a structured light 3D sensor comprising a projector and a camera wherein shaking of the camera is compensated for by optical, mechanical or electronic means.

In a first approach of the present techniques, there is provided an apparatus for generating a three-dimensional (3D) representation of a scene according to claim 1.

In a second approach of the present techniques, there is provided a method according to claim 8 for generating a three-dimensional representation of a scene using an apparatus.

In a related approach of the present techniques, use of any apparatus described herein in an electronic or mechanoelectrical device is provided according to claim 7. Any apparatus described herein may be used in (incorporated into) any one or more of: a smartphone, a camera, a foldable smartphone, a foldable smartphone camera, a foldable consumer electronics device, a camera with folded optics, an image capture device, a periscope camera, an array camera, a 3D sensing device or system, a consumer electronic device (including domestic appliances), a mobile or portable computing device, a mobile or portable electronic device, a laptop, a tablet computing device, an e-reader (also known as an e-book reader or e-book device), a computing accessory or computing peripheral device, a security system, a biometric security system, a gaming system, a gaming accessory, a robot or robotics device, a medical device, a display device or display system, a 3D printer, a tool or industrial tool, an augmented reality system, an augmented reality device, a virtual reality system, a virtual reality device, smartglasses, a wearable device, a drone (aerial, water, underwater, etc.), a vehicle (e.g. a car, an aircraft, a spacecraft, a submersible vessel, etc.), and an autonomous vehicle (e.g. a driverless car). It will be understood that this is a non-exhaustive list of example devices which may incorporate the present apparatus.

The apparatus described herein may be used for a number of technologies or purposes (and their related devices or systems), such as image capture, image display or projection, object recognition, facial recognition, biometric recognition, biometric authentication, augmented reality, virtual reality, 3D sensing, depth mapping, aerial surveying, terrestrial surveying, surveying in/from space, hydrographic surveying, underwater surveying, LIDAR, scene detection, collision warning, advanced driver-assistance systems in vehicles or autonomous vehicles, autonomous vehicles, gaming, gesture control/recognition, robotic devices, robotic device control, home automation, security, touchless technology, etc. It will be understood that this is a non-exhaustive list of example technologies which may benefit from utilising the present apparatus.

In a related approach of the present techniques, there is provided a system for generating a three-dimensional representation of a scene comprising: an apparatus as described herein, the apparatus configured to transmit data relating to the received reflected waves; and a remote apparatus or remote server for receiving the data relating to the received reflected waves and for generating a three-dimensional representation of the scene.

In a related approach of the present techniques, there is provided a non-transitory data carrier carrying processor control code to implement any of the methods described herein.

Preferred features are set out in the appended dependent claims.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise sub-components which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

Implementations of the present techniques will now be described, by way of example only, with reference to the accompanying drawings, in which:

Figure 1 shows a schematic diagram of an apparatus or system for generating a three-dimensional representation of a scene (or for 3D sensing);

Figure 2 shows a flowchart of example steps for generating a three-dimensional representation of a scene;

Figure 3 is a schematic diagram showing an apparatus or system for 3D sensing;

Figure 4 shows an exemplary pattern of light that may be used for 3D sensing;

Figure 5 shows an exemplary pattern of light that may be used for 3D sensing, which is overlaid with shifted dot patterns that arise from an optimisation procedure used to minimise the mean path length between dots;

Figure 6 shows an exemplary pattern of light that may be used for 3D sensing, which is overlaid with shifted dot patterns that arise from an optimisation procedure used to minimise the median path length between dots;

Figure 7A shows the first iteration of an optimisation procedure used to minimise the mean path length between dots; and Figure 7B shows the first iteration of an optimisation procedure used to minimise the median path length between dots;

Figure 8A shows the second iteration of an optimisation procedure used to minimise the mean path length between dots; and Figure 8B shows the second iteration of an optimisation procedure used to minimise the median path length between dots;

Figure 9A shows the third iteration of an optimisation procedure used to minimise the mean path length between dots; and Figure 9B shows the third iteration of an optimisation procedure used to minimise the median path length between dots;

Figure 10 is a flowchart of example steps for generating a 3D representation of a scene;

Figure 11 is a flowchart of example steps for generating a 3D representation of a scene;

Figure 12A is a schematic diagram of a first example actuator module that may be used to control the position of components;

Figure 12B is a schematic diagram of a second example actuator module;

Figure 13 is a schematic diagram of a third example actuator module;

Figure 14A is a perspective view of a fourth example actuator module, and Figure 14B is a side view of the fourth example actuator module;

Figure 15A is a schematic diagram of a fifth example actuator module; and

Figure 15B is a schematic diagram of a sixth example actuator module.

Broadly speaking, embodiments of the present techniques provide apparatuses, systems and methods for generating a three-dimensional (3D) representation of a scene or for 3D sensing, by using shape memory alloy (SMA) actuator wires to control the position or orientation of one or more components of an apparatus used for generating the 3D representation/performing 3D sensing.

There are many types of apparatus in which it is desirable to provide positional control of a movable element. SMA actuator wire may be advantageous as an actuator (or part of an actuator/actuating component) because of its high energy density, which means that an actuator comprising SMA actuator wire that is required to apply a particular force can be of a relatively small size.

An example type of apparatus for which SMA actuator wire may be used to provide positional control of a movable element is a camera, such as a smartphone camera, drone camera or wearable device camera. For example, to achieve focussing, zooming, or shake correction, an actuating component may be used to drive movement of a camera lens element along the optical axis of the camera and/or in a plane orthogonal to the optical axis. In miniature cameras, such as those provided within smartphones, the camera lens element is small and therefore, the actuating component may need to be compact (particularly given space restrictions within smartphones). Consequently, the actuating component must be capable of providing precise actuation over a correspondingly small range of movement. Actuating components that comprise SMA actuator wires may be used to drive movement of such camera lens components. Due to the small size of the moveable element, and the high precision actuation required, the SMA actuator wires may need to be coupled to the actuating component carefully and precisely.

SMA actuator wires may be used to provide positional control of a movable element within devices used for 3D sensing or generating a 3D representation of a scene. Example devices may be those which comprise at least one emitter of waves (such as electromagnetic waves or sound waves), and a sensor for detecting reflected waves. The reflected waves may be used to generate depth maps or establish distance information of surrounding objects and thereby, build a 3D representation of a scene. Example devices may be smartphones, mobile computing devices, laptops, tablet computing devices, security systems, gaming systems, augmented reality systems, augmented reality devices, wearable devices, drones (such as those used for mapping or surveying), vehicles (such as those having assisted driving capabilities), and autonomous vehicles.

A number of different methods are being developed and used to create depth maps or establish distance information of surrounding objects. Many of these methods (such as time of flight methods, or looking at the distortion of a projected light pattern) involve emitting a light pattern, typically using infrared (IR) light, detecting reflections of the emitted light pattern, processing either the location of light spots or time between emission and detection to deduce the distance of the reflecting object. Thus, the devices which may be used to generate a 3D representation of a scene may incorporate a structured light projector (i.e. a component that projects patterned light, typically an array of dots). Generally speaking, the devices used to generate 3D representations/perform 3D sensing may incorporate any emitter of waves (e.g. electromagnetic or sound), and a corresponding detector or sensor for detecting the reflected waves.

Existing 3D sensing systems may suffer from a number of drawbacks. For example, the strength of IR illumination may be quite weak in comparison to ambient illumination (especially in direct sunlight), meaning that multiple measurements may need to be taken to improve the accuracy of the measurement (and therefore, the accuracy of the 3D representation). Structured light (dot pattern) projectors may need to limit the resolution contained within the light pattern so that the distortion of the emitted light pattern may be interpreted easily and without ambiguity. For structured light, there is also a trade-off between the quality of depth information and the distance between the emitter and receiver in the device - wider spacing tends to give a better depth map but is more difficult to package, especially in a mobile device.

In many applications, particularly in hand-held or wearable electronic devices for example, the device measuring the depth map may change orientation with time with respect to the surroundings that are being measured. This means that depth information may be distorted during capture and may change significantly between captures. These effects can seriously impact the quality of the deduced depth map. However, shake of the detector caused by a user's hand shaking is known to improve resolution (since the shake applies a dither of fortuitously appropriate magnitude), such that some movement has been considered advantageous.

Meanwhile, in order to improve the quality of the deduced depth map, alignment of the light emitter to the detector is considered exceptionally important. Hence, anything that interferes with the baseline distance between the emitter and the detector may be disadvantageous.

Accordingly, the present techniques provide a way to change the location/position and/or orientation of an element within an apparatus used for generating a 3D representation of a scene in order to compensate for the movement of the apparatus itself while data for the 3D representation is being collected. This may improve the accuracy of the 3D representation generated using the device.

The improvement provided by the present techniques is unexpected and occurs in spite of the fact that the actuator may interfere with the baseline distance between the emitter and the receiver.

For the purpose of 3D sensing or depth mapping, it may be useful to emit patterned light or structured light. Structured radiation may be, for example, a pattern formed of a plurality of dots or points of light. When a light pattern is emitted, a receiver may detect distortions of the projected light pattern which are caused when the light pattern reflects from objects in a scene being imaged. The distortions of the original light pattern may be used to generate a 3D representation of the scene. The present techniques may provide a way to emit patterned light /structure radiation in order to generate a 3D representation of a scene, by purposefully moving components used to emit the patterned light and/or receive the distorted pattern. For example, if an apparatus comprises two light sources (e.g. two lasers), actuators may be used to move one or both of the light sources to cause an interference pattern, or if an apparatus comprises a single light source and a beam splitter, an actuator may be used to move one or both of the light source and beam splitter to create an interference pattern. Interference of the light from the two sources may give rise to a pattern of regular, equidistant lines, which can be used for 3D sensing. Using actuators to move the light sources (i.e. change their relative position and/or orientation) may produce an interference pattern having different sizes. In another example, an apparatus may project a light pattern, e.g. by passing light through a spatial light modulator, a transmissive liquid crystal, or through a patterned plate (e.g. a plate comprising a specific pattern of holes through which light may pass), a grid, grating or diffraction grating.

In the present techniques, any component within the apparatus used to generate the 3D representation (or at the very least, used to collect the data used for generating the 3D representation) may be moved using an actuation module that comprises at least one shape memory alloy (SMA) actuator wire. In embodiments, multiple components within the apparatus may be movable, either by a single actuation module or separate actuation modules. The present techniques are now described in more detail with reference to the Figures.

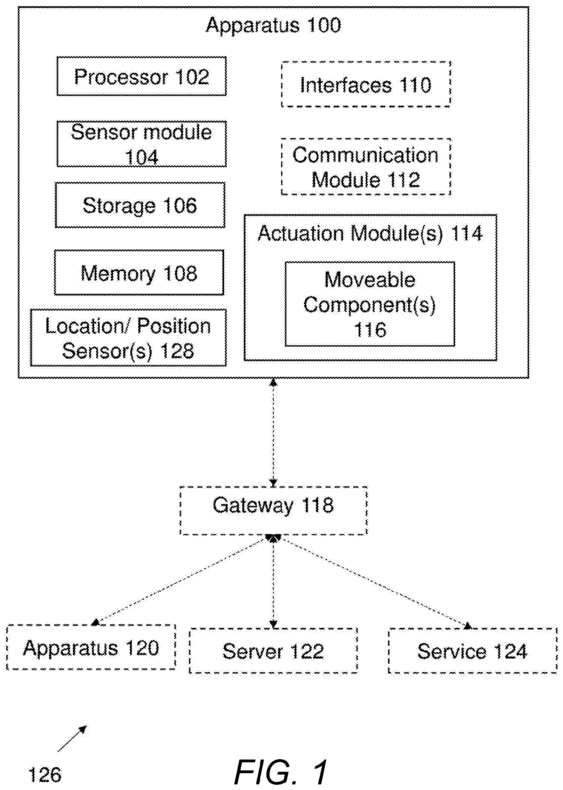

Figure 1 shows a schematic diagram of an apparatus 100 and system 126 for generating a three-dimensional representation of a scene (or for 3D sensing). The apparatus 100 may be used to generate the 3D representation (i.e. perform 3D sensing), or may be used to collect data useable by another device or service to generate the 3D representation. Apparatus 100 may be any device suitable for collecting data for the generation of a 3D representation of a scene/3D sensing. For example, apparatus 100 may be a smartphone, a mobile computing device, a laptop, a tablet computing device, a security system (e.g. a security system to enable access to a user device, an airport security system, a bank or internet banking security system, etc.), a gaming system, an augmented reality system, an augmented reality device, a wearable device, a drone (such as those used for aerial surveying or mapping), a vehicle (e.g. a car comprising an advanced driver-assistance system), or an autonomous vehicle (e.g. a driverless car). It will be understood that this is a non-limiting list of example devices. In embodiments, apparatus 100 may perform both data collection and 3D representation generation. For example, a security system and an autonomous vehicle may have the capabilities (e.g. memory, processing power, processing speed, etc.) to perform the 3D representation generation internally. This may be useful if the 3D representation is to be used by the apparatus 100 itself. For example, a security system may use a 3D representation of a scene to perform facial recognition and therefore, may need to collect data and process it to generate the 3D representation (in this case of someone's face).

Additionally or alternatively, apparatus 100 may perform data collection and may transmit the collected data to a further apparatus 120, a remote server 122 or a service 124, to enable the 3D representation generation. This may be useful if the apparatus 100 does not need to use the 3D representation (either immediately or at all). For example, a drone performing aerial surveying or mapping may not need to use a 3D representation of the area it has surveyed/mapped and therefore, may simply transmit the collected data. Apparatus 120, server 122 and/or service 124 may use the data received from the apparatus 100 to generate the 3D representation. Apparatus 100 may transmit the raw collected data (either in real-time as it is being collected, or after the collection has been completed), and/or may transmit a processed version of the collected data. Apparatus 100 may transmit the raw collected data in real-time if the data is required quickly to enable a 3D representation to be generated as soon as possible. This may depend on the speed and bandwidth of the communication channel used to transmit the data. Apparatus 100 may transmit the raw collected data in real-time if the memory capacity of the apparatus 100 is limited.

One-way or two-way communication between apparatus 100 and apparatus 120, remote server 122 or service 124 may be enabled via a gateway 118. Gateway 118 may be able to route data between networks that use different communication protocols. One-way communication may be used if apparatus 100 simply collects data on the behalf of another device, remote server or service, and may not need to use the 3D representation itself. Two-way communication may be used if apparatus 100 transmits collected data to be processed and the 3D representation to be generated elsewhere, but may wish to use the 3D representation itself. This may be the case if the apparatus 100 does not have the capacity (e.g. processing and/or memory capacity) to process the data and generate the 3D representation itself.

Whether or not apparatus 100 generates the 3D representation itself, or is part of a larger system 126 to generate a 3D representation, apparatus 100 may comprise a sensor module 104 and at least one actuation module 114. The sensor module 104 may comprise an emitter for emitting a plurality of waves (e.g. electromagnetic waves or sound waves), and a receiver for receiving reflected waves that are reflected by one or more objects in a scene. (It will be understood that the term 'object' is used generally to mean a 'feature' of a scene. For example, if the scene being imaged is a human face, the objects may be the different features of the human face, e.g. nose, eyes, forehead, chin, cheekbones, etc., whereas if the scene being imaged is a town or city, the objects may be trees, cars, buildings, roads, rivers, electricity pylons, etc.). Where the emitter of the sensor module 104 emits electromagnetic waves, the emitter may be or may comprise a suitable source of electromagnetic radiation, such as a laser. Where the emitter of the sensor module 104 emits sound waves, the emitter may be or may comprise a suitable source of sound waves, such as a sound generator capable of emitting sound of particular frequencies. It will be understood that the receiver of the sensor module 104 corresponds to the emitter of the sensor module. For example, if the emitter is or comprises a laser, the receiver is or comprises a light detector.

The or each actuation module 114 of apparatus 100 comprises at least one shape memory alloy (SMA) actuator wire. The or each actuation module 114 of apparatus 100 may be arranged to control the position and/or orientation of one or more components of the apparatus. Thus, in embodiments the apparatus 100 may comprise dedicated actuation modules 114 that may each move one component. Alternatively, the apparatus 100 may comprise one or more actuation modules 114 that may each be able to move one or more components. Preferably, the or each actuation module 114 is used to control the position and/or orientation of at least one moveable component 116 that is used to obtain and collect data used for generating a 3D representation. For example, the actuation module 114 may be arranged to change the position and/or orientation of an optical component used to direct the waves to the scene being imaged. SMA actuator wires can be precisely controlled and have the advantage of compactness, efficiency and accuracy. Example actuation modules (or actuators) that use SMA actuator wires for controlling the position/orientation of components may be found in International Publication Nos. WO2007/113478, WO2013/175197, WO2014083318, and WO2011/104518, for example.

The apparatus 100 may comprise at least one processor 102 that is coupled to the actuation module(s) 114. In embodiments, apparatus 100 may comprise a single actuation module 114 configured to change the position and/or orientation of one or more moveable components 116. In this case, a single processor 102 may be used to control the actuation module 114. In embodiments, apparatus 100 may comprise more than one actuation module 114. For example, a separate actuation module 114 may be used to control the position/orientation of each moveable component 116. In this case, a single processor 102 may be used to control each actuation module 114, or separate processors 102 may be used to individually control each actuation module 114. In embodiments, the or each processor 102 may be dedicated processor(s) for controlling the actuation module(s) 114. In embodiments, the or each processor 102 may be used to perform other functions of the apparatus 100. The or each processor 102 may comprise processing logic to process data (e.g. the reflected waves received by the receiver of the sensor module 104). The processor(s) 102 may be a microcontroller or microprocessor. The processor(s) 102 may be coupled to at least one memory 108. Memory 108 may comprise working memory, and program memory storing computer program code to implement some or all of the process described herein to generate a 3D representation of a scene. The program memory of memory 108 may be used for buffering data while executing computer program code.

Processor(s) 102 may be configured to receive information relating to the change in the position/location and/or orientation of the apparatus 100 during use of the apparatus 100. In particular, the location and/or orientation of the apparatus 100 relative to any object(s) being imaged may change during a depth measurement /3D sensing operation. For example, if the apparatus 100 is a handheld device (e.g. a smartphone), when the apparatus 100 is being used to generate a 3D representation of a scene, the location and/or orientation of the apparatus 100 may change if the hand of a user holding the apparatus 100 shakes.

Apparatus 100 may comprise at least one sensor 128 to sense or measure information relating to the change in the location and/or orientation of the apparatus 100 during use of the apparatus 100 to generate a 3D representation of a scene. Sensor(s) 128 may comprise an inertial measurement unit (IMU) for example, which may comprise one or more accelerometers and/or gyroscopes. Data from the sensor(s) 128 may be transmitted to processor 102 to enable the processor 102 to generate a control signal to adjust the position and/or orientation of one or more components of the apparatus used to capture the data needed to generate the 3D representation, to thereby compensate for the movement of the apparatus 100.

Apparatus 100 comprises communication module 112. Data transmitted and/or received by apparatus 100 may be received by/transmitted by communication module 112. The communication module 112 is configured to transmit data collected by sensor module 104 to the further apparatus 120, server 122 and/or service 124.

Apparatus 100 may comprise interfaces 110, such as a conventional computer screen/display screen, keyboard, mouse and/or other interfaces such as a network interface and software interfaces. Interfaces 110 may comprise a user interface such as a graphical user interface (GUI), touch screen, microphone, voice/speech recognition interface, physical or virtual buttons. The interfaces 100 may be configured to display the generated 3D representation of a scene, for example.

Apparatus 100 may comprise storage 106 to store, for example, any data collected by the sensor module 104, to store any data that may be used to help generate a 3D representation of a scene, or to store the 3D representation itself, for example. Storage 106 may store a lookup table or similar, where the lookup table may indicate a mapping of changes in location/orientation of apparatus 100 to how actuation module 114 should adjust the position and/or orientation of a moveable component 116. For example, if the apparatus 100 is determined to have rotated by n° in a clockwise direction, then the lookup table may indicate that the moveable component 116 has to be tilted by m°. The lookup table may therefore indicate how the actuation module 114 could adjust the position/orientation of a moveable component 116 to reduce the extent to which change in the location/orientation of the apparatus 100 affects the position of the emitted waves on objects within the scene being imaged. Processor 102 may therefore consult the lookup table when generating a control signal for the actuation module 114.

As mentioned above, the actuation module(s) 114 may be arranged to move any moveable component(s) 116 of apparatus 100. The actuation module 114 may control the position and/or orientation of the emitter. The actuation module 114 may control the position and/or orientation of the receiver. The actuation module(s) 114 may be arranged to move any moveable component(s) 116 to compensate for movements of the apparatus 100 during the data capture process (i.e. the process of emitting waves and receiving reflected waves), for the purpose of compensating for a user's hand shaking, for example. Additionally or alternatively, the actuation module(s) 114 may be arranged to move any moveable component(s) 116 to create and emit structured radiation. As mentioned above, structured radiation may be, for example, a pattern formed of a plurality of dots or points of light. When a light pattern is emitted, a receiver may detect distortions of the projected light pattern which are caused when the light pattern reflects from objects in a scene being imaged. Thus, if apparatus 100 comprises two light sources (e.g. two lasers), the actuation module(s) 114 may be may be used to move one or both of the light sources to cause an interference pattern to be formed, which is emitted by the sensor module 104. Similarly, if apparatus 100 comprises a single light source and a beam splitter, the actuation module(s) 114 may be used to move one or both of the light source and beam splitter to create an interference pattern. Interference of the light from the two sources/two beams/multiple beams/ may give rise to a pattern of regular, equidistant lines, which can be used for 3D sensing. Using the SMA-based actuation module(s) 114 to move the light sources (i.e. change their relative position and/or orientation) may produce an interference pattern having different sizes. This may enable the apparatus 100 to generate 3D representations of different types of scenes, e.g. 3D representations of a face which may be close to the apparatus 100, or 3D representations of a town/city having objects of different sizes and at different distances from the apparatus 100. In another example, apparatus 100 may project a light pattern, e.g. by passing light through a spatial light modulator, a transmissive liquid crystal, or through a patterned plate (e.g. a plate comprising a specific pattern of holes through which light may pass), a grid, grating or diffraction grating. In this example, the SMA-based actuation module(s) 114 may be arranged to move the light source and/or the components (e.g. grating) used to create the light pattern.

In embodiments where the emitter of sensor module 104 is or comprises a source of electromagnetic radiation, the actuation module(s) 114 may be configured to control the position and/or orientation of the source and/or at least one optical component in order to control the position of the radiation on objects within the scene being imaged. In embodiments, the source of electromagnetic radiation may be a laser. The at least one optical component may be any of: a lens, a diffractive optical element, a filter, a prism, a mirror, a reflective optical element, a polarising optical element, a dielectric mirror, and a metallic mirror. The receiver may be one of: a light sensor, a photodetector, a complementary metal-oxide-semiconductor (CMOS) image sensor, an active pixel sensor, and a charge-coupled device (CCD).

In embodiments, the emitter of sensor module 104 is or comprises a sound wave emitter for emitting a plurality of sound waves. For example, the sensor module 104 may emit ultrasound waves. The emitter of the sensor module 104 may be tuneable to emit sound waves of different frequencies. This may be useful if, for example, the apparatus 100 is used to generate 3D representations of scenes of differing distance from the apparatus 100 or where different levels of resolution are required in the 3D representation. The receiver of the sensor module 104 may comprise a sound sensor or microphone.

## Altering position/orientation to generate a 3D representation

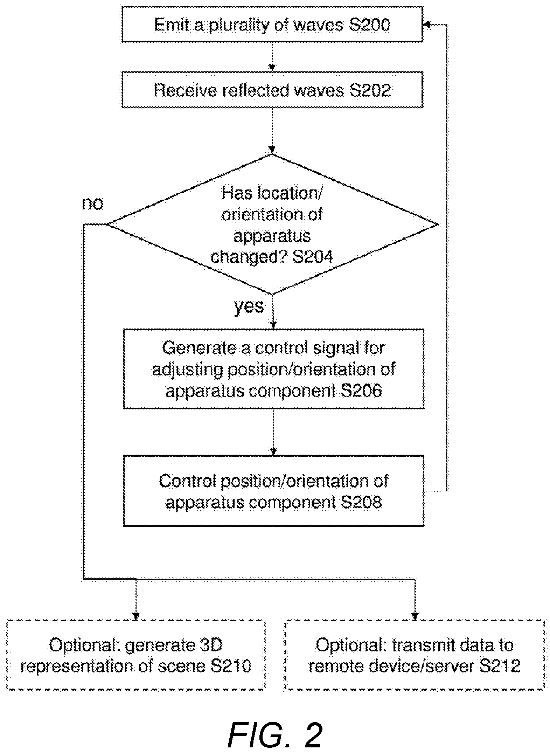

Figure 2 shows a flowchart of example steps for generating a three-dimensional representation of a scene using the apparatus 100 of Figure 1. The process begins when apparatus 100 emits a plurality of waves (step S200) to collect data relating to a scene being imaged. The apparatus receives reflected waves, which may have been reflected by one or more objects in the scene being imaged (step S202). Depending on how far away the objects are relative to the emitter/apparatus 100, the reflected waves may arrive at different times, and this information may be used to generate a 3D representation of a scene.

The apparatus 100 may determine if the location and/or orientation of the apparatus 100 has changed relative to the scene (or objects in the scene) being imaged at step S204. Alternatively, apparatus 100 may receive data from sensor(s) 128 indicating that the location and/or orientation of the apparatus 100 has changed (e.g. due to a user's hand shaking while holding apparatus 100). If the location and/or orientation of apparatus 100 has not changed, then the process continues to steps S210 or S212. At step S210 the apparatus may generate a 3D representation of a scene using the received reflected waves. For example, the apparatus may use time of flight methods or distortions in a projected pattern of radiation to determine the relative distance of different objects within a scene (relative to the apparatus 100) and use this to generate a 3D representation of the scene. Alternatively, as explained above, at step S212 the apparatus may transmit data to a remote device, server or service to enable a 3D representation to be generated elsewhere. The apparatus may transmit raw data or may process the received reflected waves and transmit the processed data.

If at step S204 it is determined that the apparatus's location and/or orientation has changed, then the process may comprise generating a control signal for adjusting the position and/or orientation of a moveable component of the apparatus to compensate for the change (step S206). The control signal may be sent to the relevant actuation module and used to adjust the position/orientation of the component (step S208). In embodiments, the actuation module may adjust the position/orientation of a lens, a diffractive optical element, a filter, a prism, a mirror, a reflective optical element, a polarising optical element, a dielectric mirror, a metallic mirror, a beam splitter, a grid, a patterned plate, a grating, or a diffraction grating. When the adjustment has been made, the process returns to step S200.

It will be understood that in embodiments where the emitter emits a pattern of structured electromagnetic radiation (e.g. a pattern of light), the process shown in Figure 2 may begin by adjusting the position and/or orientation of one or more moveable components in order to create the pattern of structured radiation.

## Altering position/orientation for super-resolution

Super-resolution (SR) imaging is a class of techniques that may enhance the resolution of an imaging system. In some SR techniques - known as optical SR - the diffraction limit of a system may be transcended, while in other SR techniques - known as geometrical SR - the resolution of a digital imaging sensor may be enhanced.

Structured light is the process of projecting a known pattern (e.g. a grid or horizontal bars) onto a scene. The way that the pattern deforms when striking a surface allows imaging systems to calculate the depth and surface (shape) information of objects in the scene. An example structured light system uses an infrared projector and camera, and generates a speckled pattern of light that is projected onto a scene. A 3D image is formed by decoding the pattern of light received by the camera (detector), i.e. by searching for the emitted pattern of light in the received pattern of light. A limit of such a structured light imaging system may be the number of points or dots which can be generated by the emitter. It may be difficult to package many hundreds of light sources close together in the same apparatus and therefore, beam-splitting diffractive optical elements may be used to multiply the effective number of light sources. For example, if there are 300 light sources in an apparatus, a 10x10 beam splitter may be used to project 30,000 dots onto a scene (object field).

However, there is no mechanism for absolutely decoding the pattern of light received by the camera. That is, there is no mechanism for identifying exactly which dots in the received pattern of light (received image) correspond to which dots in the emitted pattern of light. This means it may be advantageous to make the dot patterns sparse, because the denser the dot pattern, the more difficult it becomes to accurately map the received dots to the emitted dots. However, limiting the number of dots in the emitted pattern limits the resolution of the output feedback. For example, US Patent No. 8,493,496 states that for good performance in the mapping process, it is advantageous that the spot pattern have a low duty cycle, i.e. that the fraction of the area of the pattern with above-average brightness be no greater than 1/e (~37%). In other words, 1/e may represent an upper limit on practical fill factors for this type of structured light pattern.

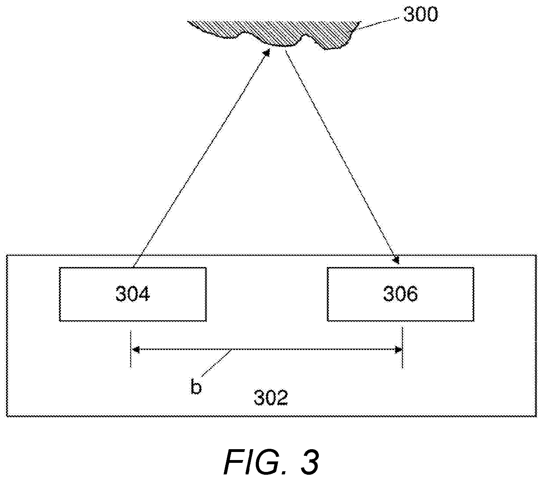

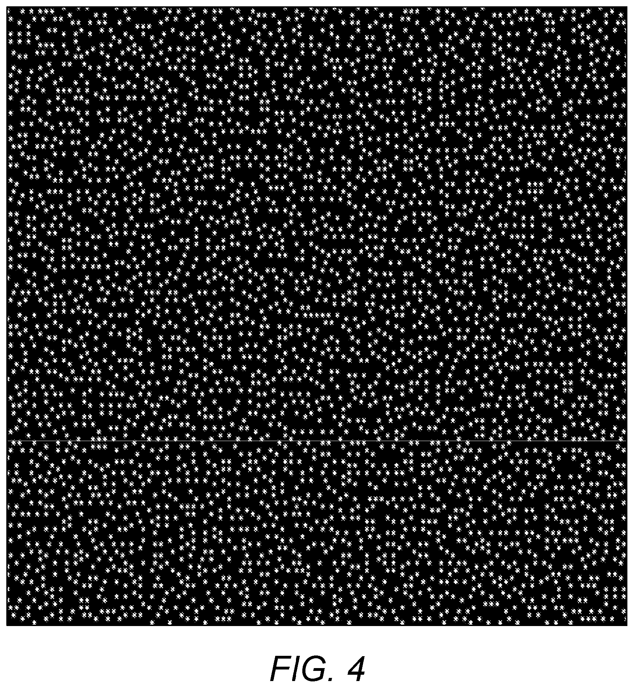

Figure 3 is a schematic diagram of an apparatus 302 that is or comprises a structured light system used for depth mapping a target/object/scene 300. The apparatus 302 may be a dedicated structured light system, or may comprise a structured light system/3D sensing system. For example, the apparatus 302 may be a consumer electronics device (such as, but not limited to, a smartphone) that comprises a 3D sensing system. A depth-sensing device 302 may comprise an emitter 304 and a detector 306 which are separated by a baseline distance b. The baseline distance b is the physical distance between the optical centres of the emitter 304 and detector 306. The emitter 304 may be arranged to emit radiation, such as structured radiation, on to the target 300. The structured radiation may be a light pattern of the type shown in Figure 4. The light pattern emitted by emitter 304 may be transmitted to the target 300 and may extend across an area of the target 300. The target 300 may have varying depths or contours. For example, the target 300 may be a human face and the apparatus 302 may be used for facial recognition.

The detector 306 may be arranged to detect the radiation reflected from the target 300. When a light pattern is emitted, the detector 306 may be used to determine distortion of the emitted light pattern so that a depth map of the target 300 may be generated. Apparatus 302 may comprise some or all of the features of apparatus 100 - such features are omitted from Figure 3 for the sake of simplicity. Thus, apparatus 302 in Figure 3 may be considered to be the same as apparatus 100 in Figure 1, and may have the same functionalities and may be able to communicate with other devices, servers and services as described above for Figure 1.

If it is assumed that the emitter 304 and detector 306 have optical paths which allow them to be modelled as simple lenses, the emitter 304 is centred on the origin and has a focal length of f, the emitter 304 and detector 306 are aligned along the X axis and are separated by a baseline b, and the target 300 is primarily displaced in the Z direction, then a dot will hit the target 300 at a spot in 3D space, $[O_x\, O_y\, O_z]$. In the image space, the dot is imaged at $\left[\dfrac{f(O_x - b)}{O_z}\quad \dfrac{f \cdot O_y}{O_z}\right]$. By comparing the received dots with the projected dots (effectively a scaled pattern with no *b* term for the baseline or Oz term for depth), the depth of the target 300 may be deduced. (The y term gives absolute scale information, whilst the x term conveys parallax information with depth).

A structured light emitter and detector system (such as system/device 302 in Figure 3) may be used to sample depth at discrete locations on the surface of object 300. It has been shown that, given certain assumptions, fields can be reconstructed based on the average sampling over that field. A field can be uniquely reconstructed if the average sampling rate is at least the Nyquist frequency of the band-limited input and the source field belongs to the $L^2$ space. However, the fidelity of this reconstruction relies on sampling noise being insignificant.

Sampling noise might arise directly in the measurement or due to bandwidth limitation of the data collection system. There are several ways that an actuator may help to reduce noise in an imaging or data collection system. For example:

1. Conventional optical image stabilisation (OIS) on the receiver may have the effect of increasing the bandwidth of the receiver. This is because perturbances such as handshake invariably manifest themselves as filters with a lowpass type of tendency - reducing the impact of these bandwidth limitations may allow for more accurate data collection.

2. Stabilisation of the projected image onto the target is an independent bonus as it maximises the chances of the projected dot pattern being stationary on the target. If the dots are moving on the target, then parallax effects will cause them to blur, and second-order functions such as detecting surface gradients by dot distortion will be less effective.

3. Multi-image exposure allows filling of the (deliberate) 'gaps' in the sampling map. This is loosely termed 'super-resolution' because it allows an image to be generated.

As mentioned above, the position/orientation of a pattern of light (e.g. a dot pattern) may be deliberately shifted via an actuator (e.g. actuation module 114) in order to fill in the 'gaps' in the sampling map and provide super-resolution. Systems in which the projected pattern is moved during exposure have been proposed, but they suffer several issues. For example, such systems must still obey limits on fill factor in order to accurately recognise/identify features in the object/scene being imaged because, as explained above, the higher the density of dots the more difficult it becomes to map the received dots to the projected/emitted dots. Furthermore, such systems may have a reduced ability to accurately determine surface gradient because dot distortion may occur while the pattern is being moved, and the distortions that occur from the moving pattern may be indistinguishable for the distortion that occur when a dot hits a curved surface. These issues suggest that discrete exposures may be preferable.

Super-resolution functionality may rely on the assumption that the target (object being imaged) is relatively still. However, many camera users will have experienced 'ghosting' from High Dynamic Range (HDR) photos taken using smartphone cameras. Ghosting is a multiple exposure anomaly that occurs when multiple images are taken of the same scene and merged, but anything that is not static in the images result in a ghost effect in the merged image. Consumer products that use two exposures are common, and there are specialised consumer products which take up to four exposures, but more than that is unusual. There is no reason to presume that depth data should be particularly more stable than image data, and so two or four exposures may be desirable for synthesis such that frame rate may be maximised while disparity between measurements may be reduced.

An actuator or actuation module 114 may be used to move a pattern of light (e.g. structured light pattern). Image data collected while the actuation module 114 is moving a moveable component 116 either may not be processed, or may be processed subject to the issues described above which arise when a pattern is moved during exposure. An example image capture technique may comprise configuring the image sensor or detector to stream frames in a 'take one, drop two' sequence. That is, one frame may be kept and the subsequent two frames may be discarded, and then the next frame may be kept, and so on. The dropped frames provide a window of time during which the actuation module 114 may complete its movement to move the moveable component 116 to the next position. Depth sensors typically have relatively low pixel counts, so potentially very high frame rates could be realised (e.g. 120 frames per second (fps) or higher). A frame rate of 30 fps may be more typical, but this slower rate may increase the likelihood that both the emitter and the target move during the image capture process. In the example where an image capture device is capturing 120 fps, the 'take one, drop two' concept may provide a window of 8ms in which the actuation module 114 may complete the movement of the moveable component 116.

Standard multiframe techniques may be used to merge captured image data together. However, due to data sparsity, the merging of captured image data may need to be done using inference rather than direct analytical techniques. The most common multiframe technique is frame registration. For example, an affine transformation may be used to deduce the best way to map frames onto each other. This may involve selecting one frame of data as a 'key frame' and then aligning other frames to it. This technique may work reasonably well with images because of the high amount of data content. However, depth maps are necessarily data sparse, and therefore Bayesian estimation of relative rotations and translations of the frames may be used instead to map the frames onto each other. In many instances, there will be insufficient evidence to disrupt a prior estimate of position, but where there is sufficient evidence this may need to be taken into account when merging images/frames.

For the reasons explained above, the actuation module 114 may be used to move/translate a structured light pattern to cover the 'gaps'. However, the analysis of non-uniformly sampled data is relatively difficult and there is no single answer to guide where to place 'new samples' to improve the overall sampling quality. In a two-dimensional space, choosing to reduce some metric such as the mean path between samples or median path between samples may be a good indicator of how well-sampled the data is.

The above-mentioned example structured light system, comprising a light source (e.g. a laser beam, or a vertical-cavity surface-emitting laser (VCSEL) array) and a diffractive optical element (e.g. a beam splitter) provides relatively few opportunities to choose where new samples may be placed to improve the overall sampling quality. For example, the VCSEL array could be moved, or the diffractive optical element could be tilted - both options have the effect of translating the dot pattern, provided the movement can be effected without moving the VCSEL out of the focal plane of the optics, or without compromising any heatsink which may be provided in the system. Moving the VCSEL array may be preferred because, while tilting the diffractive optical element may have minimal impact on the zeroth mode (i.e. VCSEL emission straight through the diffractive optical element), such that the centre of the image will not be subject to significant motion, it is possible that better resolving the centre of the image is important.

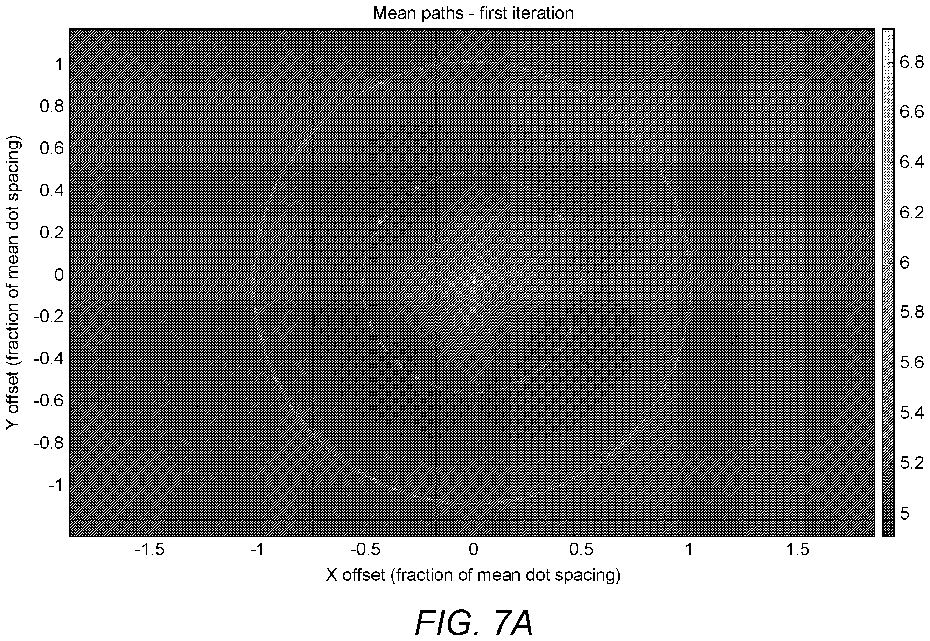

Figure 4 shows an exemplary pattern of light that may be used for 3D sensing. The pattern of light may be provided by a VCSEL array. To extract information from the movement of the pattern, processor 102 needs to know how much the actuation module 114 (and therefore of the moveable component 116) has moved during each sampled timestep. Due to the typical pseudorandom nature of the dot patterns used, there are typically no particularly good or bad directions in which to move the projected pattern - the improvement in sampling behaviour is quite uniformly good once the movement increases to about half of the mean inter-dot distance. However, for well-designed patterns of light, there may be a genuine optimal space beyond which the expected improvement falls as shown in Figures 7A to 9B.

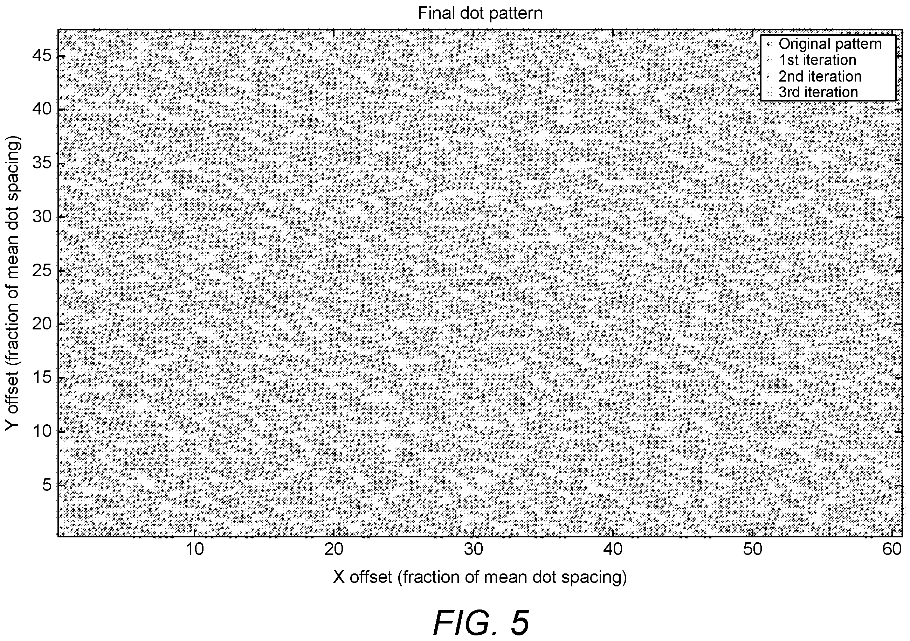

To determine where to place further samples (i.e. where to move a dot pattern and capture further images), it is important to consider what the objective function for minimisation is. A number of factors may be used to optimise where to move the dot pattern in order to provide super-resolution, such as minimising the mean path length between the dots when sampling, minimising the median path length between dots when sampling, minimising a maximum minus minimum path length between dots, minimising a standard deviation of path lengths, etc. Figures 5 to 9B show two example techniques to determine where to place further samples - minimising mean path length and minimising median path length.

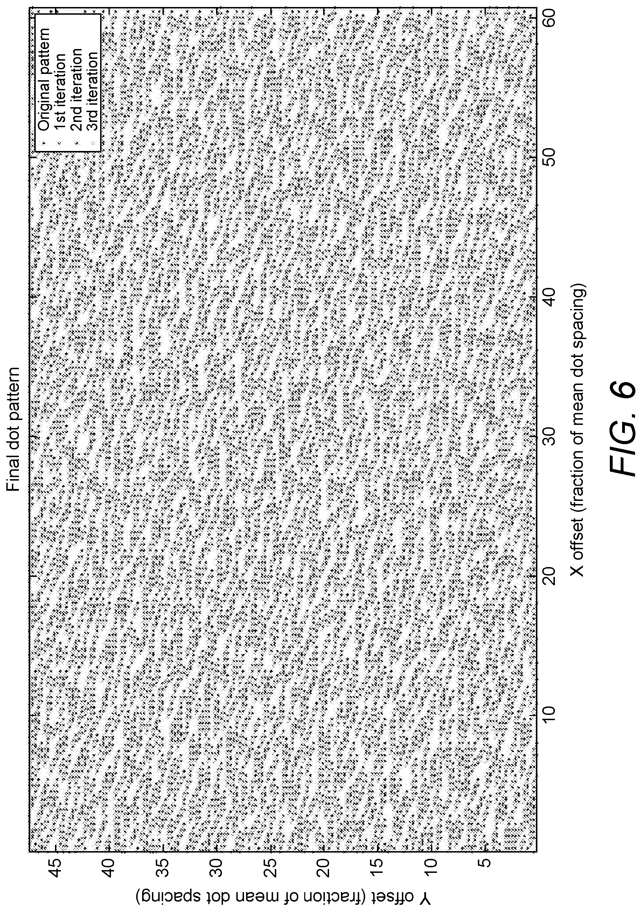

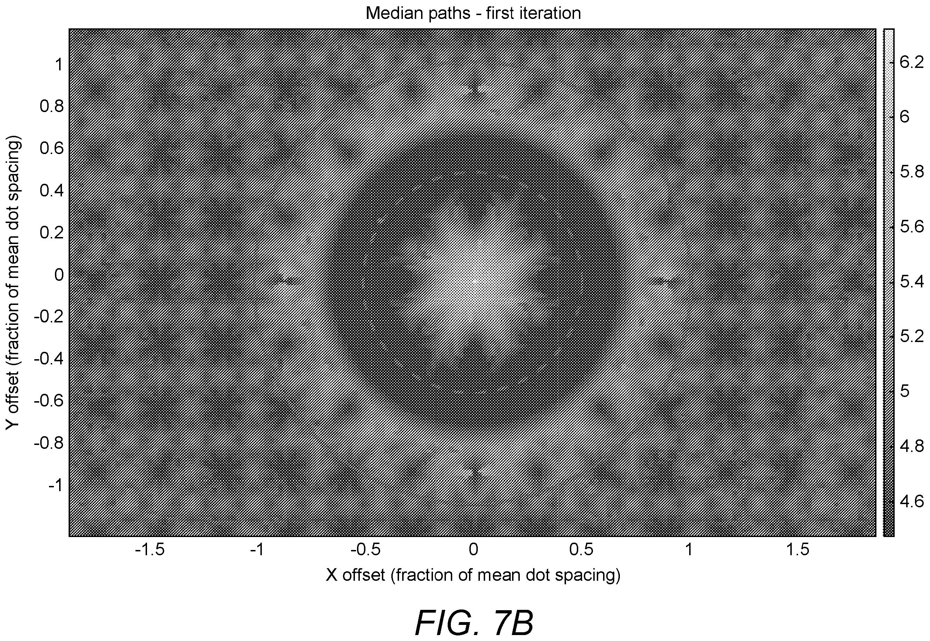

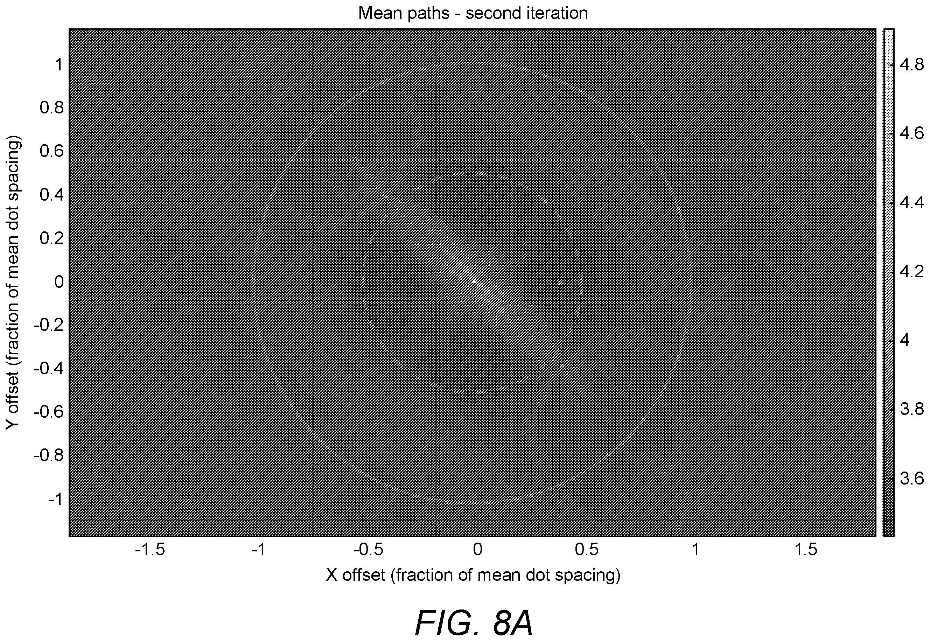

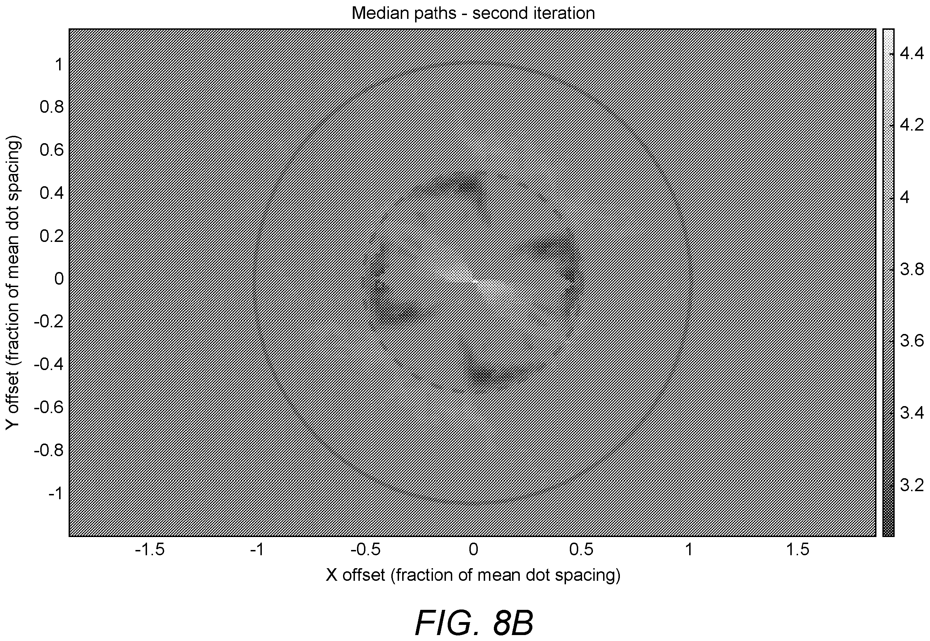

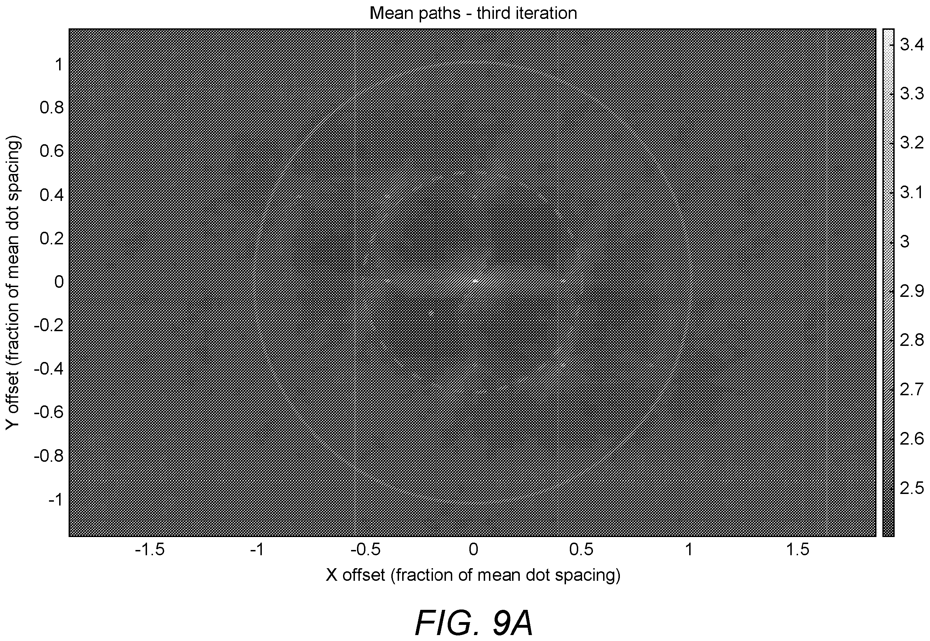

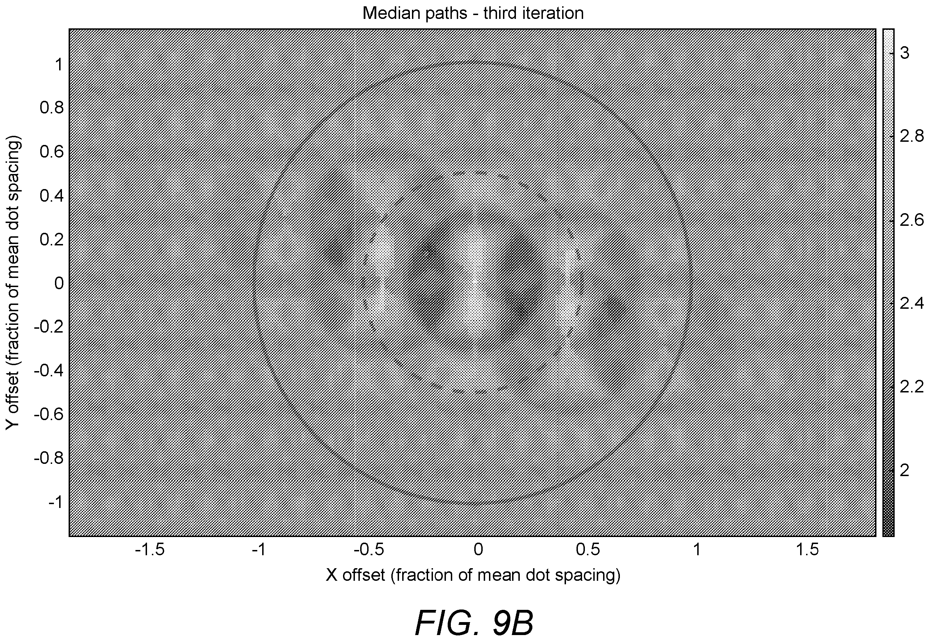

Figure 5 shows an example pattern of light, which in this case is a dot pattern. Simulation data is overlaid over the original pattern of light in the Figure. In this simulation, the optimisation procedure attempts to minimise the mean path length between samples in a final composite depth map. To perform the simulation, a specific point in an image is selected for evaluation, the original dot pattern is shifted by some distance in the x and/or y directions (i.e. an offset), and the new pattern is overlaid over the original pattern. Figure 7A shows the first iteration of this minimisation procedure (where, the selected point is at x=-0.40, y=+0.38), Figure 8A shows the second iteration of this minimisation procedure (where the selected point is at x=+0.40, y=+0.00), and Figure 9A shows the third iteration (where the selected point is at x=-0.19, y=+0.15). The effect of shifting the pattern in each iteration is shown in Figure 5. Similarly, Figure 6 shows an example pattern of light, which is also a dot pattern. In this case, the optimisation procedure attempts to minimise the median path length between samples in a final composite depth map. To perform the simulation, a specific point in an image is selected for evaluation, the original dot pattern is shifted by some distance in the x and/or y directions (i.e. an offset), and the new pattern is overlaid over the original pattern. Figure 7B shows the first iteration of this minimisation procedure (where, the selected point is at x=-0.42, y=+0.28), Figure 8B shows the second iteration of this minimisation procedure (where the selected point is at x=-0.42, y=-0.01), and Figure 9B shows the third iteration (where the selected point is at x=-0.21, y=+0.13). The effect of shifting the pattern in each iteration is shown in Figure 6.

As can be seen in Figures 7A and 7B, there are relatively flat plateaus in the mean and median length functions, which means that additional information can be brought into consideration. With respect to SMA-based actuators, it may be useful to minimise the movement of the actuation module(s) 114 because smaller movement means less actuator wire is required, which in turn may reduce power consumption and potentially may increase bandwidth. However, there may also be advantages to choosing areas which do not require a high degree of accuracy to achieve the desired improvement to the depth mapping. For example, an area with acceptable improvement at 50µm displacement with 10µm of 'good performance' around it would be preferred to one at a similar displacement with only 1µm of 'good performance' around it. For the simulations shown in the Figures, the optimisation field is:

$$\text{Cost} = \text{Displacement} - 10 \text{ 'distance to poor performance'}$$

That is, one unit of required accuracy is traded for 10 units of displacement. In other words, a solution which requires a displacement of 1 but directly borders an area of poor performance is equally preferred to a solution which has a displacement of 11 but has one unit of separation to an area of poor performance. More complex optimisation fields can be imagined - e.g. solutions which require submicron accuracy should be marked as infeasible, solutions should be judged on a composite of absolute and relatively accuracy requirements.

It should be noted that the first simulation result for the two different optimisations (see Figures 7A and 7B), combined with the idea that fewer than four exposures should be synthesised together (for the reason explained earlier), leads to the conclusion that an SMA actuator that can move a VCSEL array reliably and quickly between two known positions, separated by half the average dot spacing, would be a useful actuator regardless of the axis along which the movement is effected. It will be understood that moving one or more components by around half the average dot spacing is merely one example of the way frames could be collected for super-resolution. It will also be understood that the movement of half the average dot spacing may not be limited to exactly half the average dot spacing, but may cover movements in a range.

It can also be seen that the results of the simulations are optimal or close to optimal:

| Additional frames | Optimal final dot spacing (as fraction of original spacing) | Achieved mean dot spacing |
|---|---|---|
| 0 | 100% | 100% |
| 1 | 71% | 71% |
| 2 | 50% | 50% |
| 3 | 35% | 35% |

There is a relatively free choice about the form-factor of both the emitter and receiver components of a structured light system. The receiver may be a fairly normal image sensor (possibly with an optimised colour filter) and therefore, having a receiver of a standard size (e.g. industry standard size) may be beneficial for cost purposes.

Typical VCSEL arrays may have emission surfaces of around 1.5mm by 1mm, and it may be impractical to make them much smaller and may be costly to make them larger. If the approach of moving the VCSEL is selected, a pattern of the type shown in Figure 5 has an average inter-dot spacing of about 21µm. As noted earlier, this means that movement of around 10µm may be beneficial.

As explained above, there are limits on the possible fill factors for structured light projectors/systems, so there are necessarily 'gaps' in the projected dot field which can be filled using an actuator to steer light. However, synthesising more than four exposures together is unlikely to result in a positive user experience (because of the longer time to capture the images and generate the composite image). The accuracy of deducing the depth map may depend on noise in the received data and so, in addition to filling in gaps, using 'standard actuator techniques' for reducing noise may also be beneficial. The best general case performance may involve dropping two frames from the depth/image sensor each time the actuator moves to obtain another exposure for the depth map. Generating the composite image (i.e. synthesising multiple exposures together) may require a statistical approach because the incoming data may be sparse. Moving the VCSEL by approximately half the mean dot spacing (typically 10µm) may provide optimal improvement in sampling. A bimodal actuator that is able to move half the inter-dot spacing may therefore be useful. It will be understood therefore that potentially, the resolution of an imaging system or 3D imaging system may be doubled by using an actuator that moves a dot pattern in one dimension. Further improvement to the resolution may require the actuator to move a dot pattern in two dimensions.

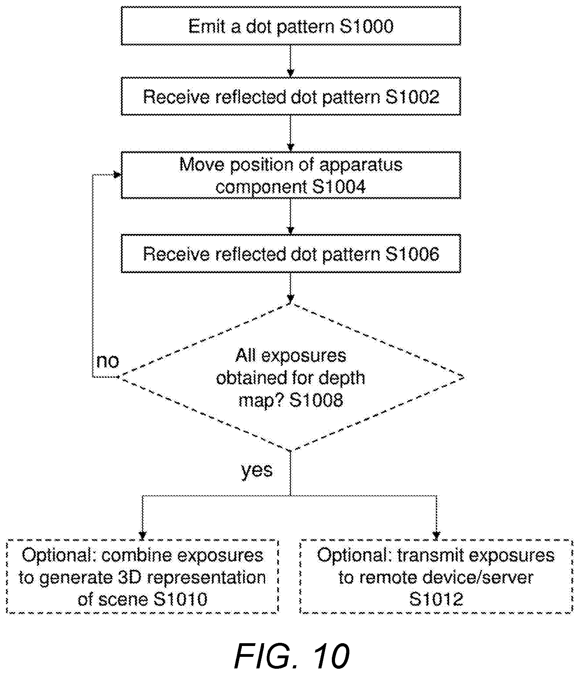

Figure 10 is a flowchart of example steps for generating a 3D representation of a scene using the apparatus 100 of Figure 1. The process begins when apparatus 100 emits a structured light pattern, such as a dot pattern (step S1000) to collect data relating to a scene being imaged. The emitter may continuously emit the light pattern, such that the light pattern is projected onto the scene while one or more components of the apparatus are being moved to shift the light pattern over the scene. In embodiments, the light pattern may be emitted non-continuously, e.g. only when the component(s) has reached the required position. The apparatus receives a reflected dot pattern, which may have been reflected by one or more objects in the scene being imaged (step S1002). If the scene or object being imaged has depth (i.e. is not entirely flat), the reflected dot pattern may be distorted relative to the emitted dot pattern, and this distortion may be used to generate a 3D representation (depth map) of the object.

As explained above, multiple exposures may be used to generate the 3D representation/depth map. Thus, at step S1004, the apparatus 100 may generate a control signal for adjusting the position and/or orientation of a moveable component of the apparatus to move the moveable component to another position for another exposure to be made. The control signal may be sent to the relevant actuation module 114 and used to adjust the position/orientation of the moveable component. The actuation module 114 may be used to move a moveable component by approximately half the mean dot spacing during each movement. The actuation module 114 may adjust the position/orientation of a lens, a diffractive optical element, a structured light pattern, a component used to emit a structured light pattern, a filter, a prism, a mirror, a reflective optical element, a polarising optical element, a dielectric mirror, a metallic mirror, a beam splitter, a grid, a patterned plate, a grating, or a diffraction grating. A reflected dot pattern may then be received (step S1006) - this additional exposure may be combined with the first exposure to generate the 3D representation. As explained earlier, while the actuation module 114 is moving the moveable component from the initial position to a subsequent position (which may be a predetermined/predefined position or set of coordinates), the emitter may be continuously emitting a light pattern and the receiver/image sensor may be continuously collecting images or frames. Thus, processor 102 (or another component of apparatus 100) may discard one or more frames (e.g. two frames) collected by the receiver/image sensor during the movement. In this case therefore, the emitter continuously emits a pattern of light, and the receiver continuously detects received patterns of light. Additionally or alternatively, it may be possible to switch-off the receiver/image sensor and/or the emitter while the moveable component is being moved, such that either the emitter only emits when in the required position or that the receiver only detects reflected light when in the required position, or both.

The actuation module 114 may be configured to move the moveable component 116 to certain predefined positions/coordinates in a particular sequence in order to achieve super-resolution and generate a depth map of an object. The predefined positions/coordinates may be determined during a factory calibration or testing process and may be provided to the apparatus (e.g. to processor 102 or stored in storage 106 or memory 108) during a manufacturing process. The number of exposures, the positions at which is exposure is made, and the sequence of positions, may therefore be stored in the actuation module 114 for use whenever super-resolution is to be performed.

At step S1008, the process may comprise determining if all the (pre-defined) required number of exposures have been obtained/captured in order to generate the 3D representation. This may involve comparing the number of captured exposures with the number of pre-defined required number of exposures (which may be stored in storage 106/memory 108). If the comparison indicates that the required number of exposures has not been achieved, the actuation module 114 moves the moveable component 116 to the next position in the pre-defined sequence to capture another image. This process may continue until all required exposures have been captured. In embodiments, step S1008 may be omitted and the process may simply involve sequentially moving the moveable component 116 to each pre-defined position and receiving a reflected dot pattern at that position. The number of exposures/images captured may be four exposures. In embodiments, the number of exposures may be greater than four, but the time required to capture more than four exposures may negatively impact user experience.

Once all the required exposures/images have been captured, the apparatus 100 may generate a 3D representation of a scene using the received reflected dot patterns. For example, the apparatus combines the exposures (potentially using some statistical technique(s) to combine the data) to generate a 3D representation of the scene (step S1010). Alternatively, as explained above, at step S1012 the apparatus may transmit data to a remote device, server or service to enable a 3D representation to be generated elsewhere. The apparatus may transmit raw data or may process the received reflected dot patterns and transmit the processed data.

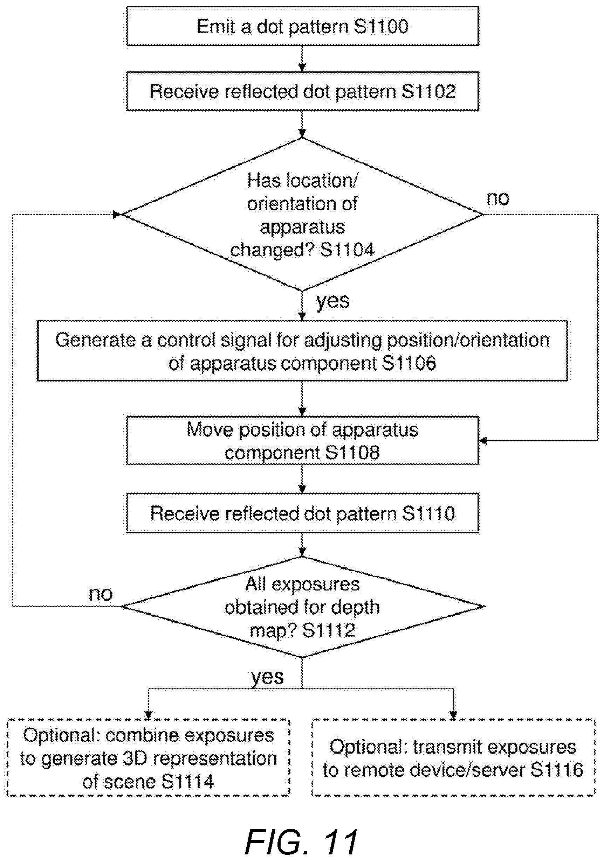

Figure 11 is a flowchart of example steps for generating a 3D representation of a scene, which combines the techniques shown in Figures 2 and 10. There may be a number of ways in which the techniques for correcting for hand-shake and the techniques for obtaining super-resolution may be combined and therefore, it will be understood that Figure 11 is exemplary only.

The process begins when apparatus 100 emits a structured light pattern, such as a dot pattern (step S1100) to collect data relating to a scene being imaged. The emitter may continuously emit the light pattern, such that the light pattern is projected onto the scene while one or more components of the apparatus are being moved to shift the light pattern over the scene. In embodiments, the light pattern may be emitted non-continuously, e.g. only when the component(s) has reached the required position. The apparatus receives a reflected dot pattern, which may have been reflected by one or more objects in the scene being imaged (step S1102). If the scene or object being imaged has depth (i.e. is not entirely flat), the reflected dot pattern may be distorted relative to the emitted dot pattern, and this distortion may be used to generate a 3D representation (depth map) of the object.

The apparatus 100 may determine if the location and/or orientation of the apparatus 100 has changed relative to the scene (or objects in the scene) being imaged at step S1104. Alternatively, apparatus 100 may receive data from sensor(s) 128 indicating that the location and/or orientation of the apparatus 100 has changed (e.g. due to a user's hand shaking while holding apparatus 100). If the location and/or orientation of apparatus 100 has not changed, then the process continues to step S1108.

If at step S1104 it is determined that the apparatus's location and/or orientation has changed, then the process may comprise generating a control signal for adjusting the position and/or orientation of a moveable component of the apparatus to compensate for the change (step S1106). The control signal may be sent to the relevant actuation module and used to adjust the position/orientation of the component (step S1108). The control signal may be generated using the next position to which the moveable component 116 is to be moved to (for the super-resolution process) and any compensation required to counteract the change in the position/orientation of the apparatus itself. In embodiments, the actuation module may adjust the position/orientation of a lens, a diffractive optical element, a structured light pattern, a component used to emit a structured light pattern, a filter, a prism, a mirror, a reflective optical element, a polarising optical element, a dielectric mirror, a metallic mirror, a beam splitter, a grid, a patterned plate, a grating, or a diffraction grating.

When the moveable component is at the next position, a reflected dot pattern may be received (step S1110) - this additional exposure may be combined with the first exposure to generate the 3D representation. As explained earlier, while the actuation module 114 is moving the moveable component from the initial position to a subsequent position (which may be a predetermined/ predefined position or set of coordinates), the emitter may be continuously emitting a light pattern and the receiver/image sensor may be continuously collecting images or frames. Thus, processor 102 (or another component of apparatus 100) may discard one or more frames (e.g. two frames) collected by the receiver/image sensor during the movement. Additionally or alternatively, it may be possible to switch-off the receiver/image sensor, and/or the emitter, while the moveable component is being moved, such that either the emitter only emits when in the required position, or the receiver only detects reflected light when in the required position, or both.

The actuation module 114 may be configured to move the moveable component 116 to certain predefined positions/coordinates in a particular sequence in order to achieve super-resolution and generate a depth map of an object. The predefined positions/coordinates may be determined during a factory calibration or testing process and may be provided to the apparatus (e.g. to processor 102 or stored in storage 106 or memory 108) during a manufacturing process. The number of exposures, the positions at which is exposure is made, and the sequence of positions, may therefore be stored in the actuation module 114 for use whenever super-resolution is to be performed.

At step S1112, the process may comprise determining if all the (pre-defined) required number of exposures have been obtained/captured in order to generate the 3D representation. This may involve comparing the number of captured exposures with the number of pre-defined required number of exposures (which may be stored in storage 106/memory 108). If the comparison indicates that the required number of exposures has not been achieved, the actuation module 114 moves the moveable component 116 to the next position in the pre-defined sequence to capture another image. This process may continue until all required exposures have been captured. In embodiments, step S1112 may be omitted and the process may simply involve sequentially moving the moveable component 116 to each pre-defined position and receiving a reflected dot pattern at that position. The number of exposures/images captured may be four exposures. In embodiments, the number of exposures may be greater than four, but the time required to capture more than four exposures may negatively impact user experience. Prior to moving the moveable component, the process may determine if the location/orientation of the apparatus has changed (step S1104). If no change has occurred or been sensed, the moveable component may be moved to the next position in the predetermined sequence of positions. If a chance has occurred, then steps S1106 and S1108 may be performed, as described above.

Once all the required exposures/images have been captured, the apparatus 100 may generate a 3D representation of a scene using the received reflected dot patterns. For example, the apparatus combines the exposures (potentially using some statistical technique(s) to combine the data) to generate a 3D representation of the scene (step S1114). Alternatively, as explained above, at step S1116 the apparatus may transmit data to a remote device, server or service to enable a 3D representation to be generated elsewhere. The apparatus may transmit raw data or may process the received reflected dot patterns and transmit the processed data.

The techniques and apparatus described herein may be used for, among other things, facial recognition, augmented reality, 3D sensing, depth mapping. aerial surveying, terrestrial surveying, surveying in or from space, hydrographic surveying, underwater surveying, and/or LIDAR (a surveying method that measures distance to a target by illuminating the target with pulsed light (e.g. laser light) and measuring the reflected pulses with a sensor). It will be understood that this is a non-exhaustive list.

## Example Actuator Modules

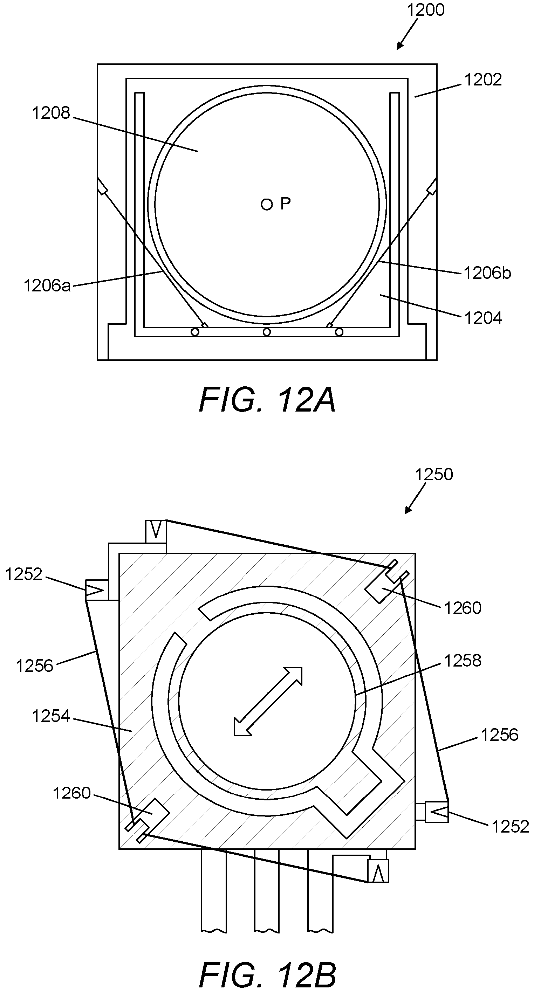

As mentioned above, the or each actuation module 114 of apparatus 100 may be arranged to control the position and/or orientation of one or more components of the apparatus. Example actuation modules (or actuators) that use SMA actuator wires for controlling the position/orientation of components may be found in International Publication Nos. WO2007/113478, WO2013/175197, WO2014083318, and WO2011/104518. Further example actuation modules or actuators are now described with reference to Figures 12A to 15B.

Figure 12A is a schematic diagram of a first example actuator module 1200 that may be used to control the position of components. The actuator module 1200 comprises a static component (or suspension system) 1202 and a moveable component 1204. The actuator 1200 comprises two lengths of shape memory alloy (SMA) actuator wire 1206a, 1206b, where an end of each SMA actuator wire 1206a,b is coupled to the static component 1202 and another end of each SMA actuator wire 1206a,b is coupled to the moveable component 1204. Each SMA actuator wire 1206a,b is arranged at an angle to arranged to apply forces to the moveable component 1204 with respective components perpendicular to a primary axis P that are in opposite directions. The SMA actuator wires 1206a,b are arranged such that the moveable component 1204 moves in a single degree of freedom. The angled SMA actuator wires 1206a,b may increase the stroke of the moveable component 1204 for a given length of wire, which may also enable higher frequency motion. The return path for the electrical current is through spring arms which enables the two SMA wires to be driven independently. The spring arms are designed to have low stiffness in a single DOF (for the motion) but to be stiff in all other directions. Tension in the SMA wires will result in the spring arms being pulled into tension which prevents issues with buckling. The moveable component 1204 may be the component of the apparatus which is moved to generate a 3D representation of a scene. Alternatively, the moveable component 1204 may be used to hold or contain or be coupled to the component of the apparatus which is moved to generate a 3D representation of a scene. For example, the moveable component 1204 may be a lens holder which holds a lens or lens stack 1208, and it is the lens/lens stack 1208 which is moved in the process to generate a 3D representation of a scene.

Figure 12B is a schematic diagram of a second example actuator module 1250. This arrangement is also able to move a moveable component in a single degree of freedom, but the length of both SMA actuator wires 1256 is longer than in the embodiment shown in Figure 12A. The actuator 1250 comprises a static component or suspension system having crimps 1252, and a moveable component 1254. The moveable component 1254 may be a plate, which is able to move relative to the static component. Each SMA actuator wire 1256 is coupled at a first end to a static crimp 1252 and at a second end to another static crimp 1252. Each SMA actuator wire 1256 is coupled along its length to a hook 1260 or similar component (e.g. a pin, dowel, flexible hook, etc.). This has the advantage of all electrical contacts being made on the static portion, which may simplify manufacturing and the design. Furthermore, actuator has longer lengths of SMA actuator wire compared to other designs, which means the available stroke is also increased. The moveable component 1254 comprises a resilient ring component 1258. The resilient ring component 1258 may be, or may be coupled to, the component which is moved to generate a 3D representation of a scene. For example, the ring component 1258 may hold a lens or lens stack. The SMA actuator wires 1256 and resilient ring component 1258 are arranged to enable linear motion of the moveable component 1254 (e.g. in the direction of the arrow in Figure 12B).

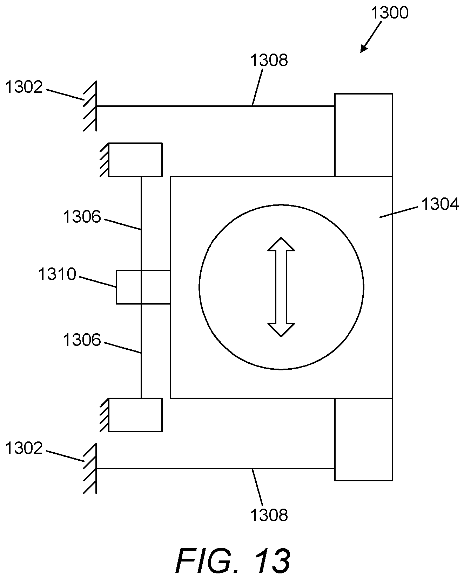

Figure 13 is a schematic diagram of a third example actuator module 1300. The actuator 1300 comprises a static component or suspension system 1302 and a moveable component 1304. The moveable component 1304 may be the component of the apparatus which is moved to generate a 3D representation, or may be coupled to that component. The actuator 1300 may comprise two lengths of SMA actuator wire 1306. In embodiments, the two lengths of SMA actuator wire 1306 may be two portions of a single piece of SMA actuator wire. Each length of SMA actuator wire 1306 is coupled at one end to the static component 1302 (e.g. via a static crimp), and is coupled at another end to the moveable component 1304, e.g. via a moveable crimp 1310. The moveable component 1304 may have a single degree of freedom, and may move along the direction of the arrow in Figure 13. The actuator 1300 comprises two resilient arms 1308, which may be formed by flexures or other spring-like components. The two lengths of SMA actuator wire may be driven separately and act as two opposing wires. In other words, contraction of one length of SMA actuator wire causes the moveable component 1304 to move in one direction, and contraction of the other length of SMA actuator wire causes the moveable component 1304 to move in the opposite direction.

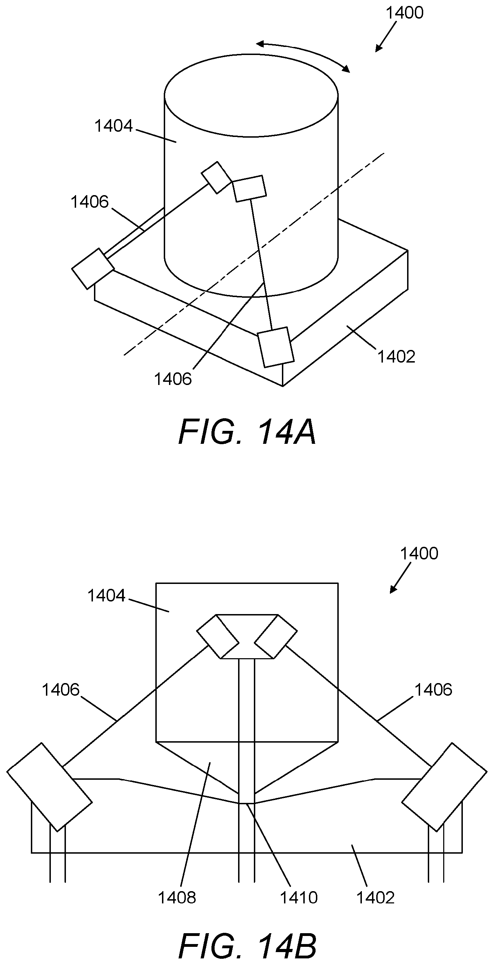

Figure 14A is a perspective view of a fourth example actuator module 1400, and Figure 14B is a side view of the fourth example actuator module 1400. The actuator 1400 comprises a static component 1402 and a moveable component 1404. The moveable component 1404 may be, or may be coupled to, the component which is moved to generate a 3D representation. The actuator 1400 comprises two lengths of SMA actuator wire 1406, where each length of SMA actuator wire is coupled at one end to the static component 1402 and at another end to the moveable component 1404. The moveable component 1404 and static component 1402 are coupled together via a rocking joint. That is, the static component 1402 comprises a socket, dimple or recess 1410, and the moveable component 1404 comprises a corresponding protrusion or rocking element 1408 which sits within the socket 1410. Contraction of one of the lengths of SMA actuator wire 1406 causes the moveable component 1404 to tilt or rock within the socket in one direction, and contraction of the other length of SMA actuator wire 1406 causes the moveable component to tile in the opposite direction.

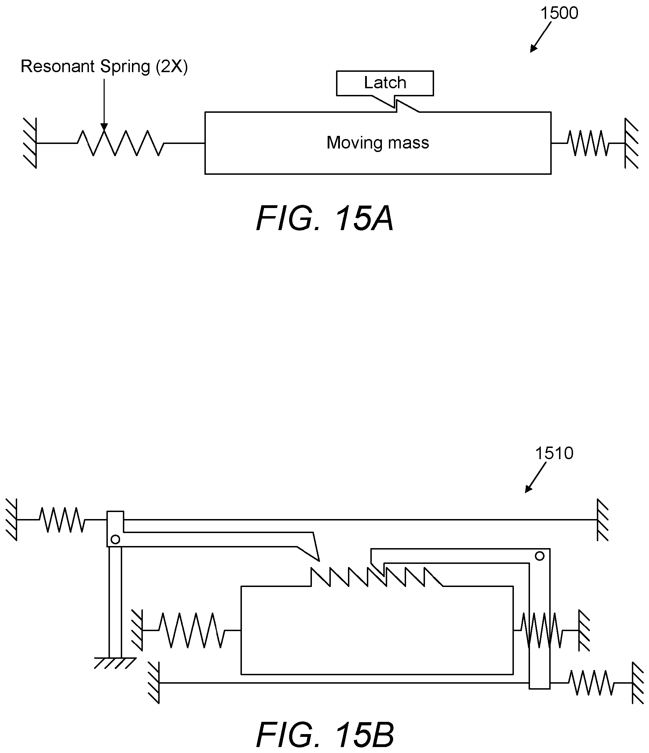

Figure 15A is a schematic diagram of a fifth example actuator module 1500, and Figure 15B is a schematic diagram of a sixth example actuator module 1510. Both actuators 1500 and 1510 are examples of linear resonant actuators. In embodiments, in order to generate a 3D representation of a scene, the projected illumination may need to be moved over the scene at a high frequency. However, the speed of SMA actuators is limited by the cooling rate of SMA actuator wire. The linear resonant actuators shown in Figures 15A and 15B decouple the frequency of motion from the SMA actuator cooling rate. A detailed explanation of how the actuators 1500 and 1510 work can be found in International Patent Publication No. WO2017/208003.

It will be understood that the actuators shown in Figures 12A to 15B are merely some non-limiting examples of actuators that may be used in an apparatus to enable a 3D representation of a scene to be generated.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

**Claims**

1. An apparatus (100) for generating a three-dimensional representation of a scene, the apparatus (100) comprising:

   a sensor module (104) comprising:

      an emitter (304) for emitting a plurality of waves; and
      a receiver (306) for receiving reflected waves that are reflected by one or more objects (300) in the scene for generating a three-dimensional, 3D, representation of the scene;

   at least one actuation module (114) for controlling one or both of a position or orientation of one or more components of the apparatus (100);
   at least one processor (102) for generating a control signal for the actuation module (114) for adjusting the position and/or orientation of one or more components of the apparatus (100), wherein the at least one processor (102) is configured to generate, using the reflected waves, the 3D representation of the scene, or wherein the apparatus (100) further comprises a communication module (112) for transmitting data relating to the received reflected waves to a remote device (120) or server (122) configured to generate the 3D representation of the scene, **characterised in that**
   the actuation module (114) comprises at least one shape memory alloy, SMA, actuator wire (1206a,b).

2. The apparatus (100) as claimed in claim 1 further comprising at least one sensor (128) for sensing changes in position and/or orientation of the apparatus (100) relative to one or more objects (300) in the scene, where the at least one sensor (128) is a gyroscope or an accelerometer, and optionally the at least one processor (102) generates the control signal using the changes in relative position and/or orientation sensed by the at least one sensor (128).

3. The apparatus (100) as claimed in any preceding claim where the actuation module (114) controls the position or orientation of the emitter (304) and/or the position or orientation of the receiver (306).

4. The apparatus (100) as claimed in any one of claims 1 to 3 wherein the emitter (304) comprises a sound wave emitter for emitting a plurality of sound waves, and optionally comprises a sound sensor or microphone.

5. The apparatus (100) as claimed in any one of claims 1 to 3 wherein the emitter (304) comprises a source of electromagnetic radiation and at least one optical component (1208), and where the actuation module (114) controls the position or orientation of one or both of the source and the at least one optical component (1208), and optionally the source of electromagnetic radiation comprises at least one laser, and optionally the at least one optical component (1208) is any one of: a lens, a diffractive optical element, a filter, a prism, a mirror, a reflective optical element, a polarizing optical element, a dielectric mirror, a metallic mirror, a beam splitter, a grid, a patterned plate, a grating, and a diffraction grating, and optionally the receiver is any one of: a light sensor, a photodetector, a complementary metal-oxide-semiconductor, CMOS, image sensor, an active pixel sensor, and a charge- coupled device, CCD.

6. The apparatus (100) as claimed in claim 5 where the electromagnetic radiation emitted by the emitter (304) is a pattern of structured electromagnetic radiation.

7. Use of an apparatus (100) as recited in any one of claims 1 to 6 for facial recognition and/or augmentedreality and/or any one or more of: image capture, image display or projection, object recognition, biometric recognition, biometric authentication, virtual reality, 3D sensing, depth mapping, aerial surveying, terrestrial surveying, surveying in or from space, hydrographic surveying, underwater surveying, LIDAR, scene detection, collision warning, advanced driver-assistance systems, gaming, gesture control, gesture recognition, robotic devices, robotic device control, home automation, security and touchless technology.

8. A method for generating a three-dimensional representation of a scene using an apparatus (100), the method comprising:

emitting (S200), using an emitter (304) of the apparatus (100), a plurality of waves;
receiving (S202), using a receiver (306) of the apparatus (100), reflected waves that are reflected by one or more objects (300) in the scene for generating a three-dimensional, 3D, representation of the scene;
generating (S206), using at least one processor (102) of the apparatus (100), a control signal for at least one actuation module (114) for adjusting the position and/or orientation of one or more components of the apparatus;
controlling (S208), using the actuation module (114) of the apparatus, one or both of a position or orientation of one or more components of the apparatus;
generating (S210), using the at least one processor (102) and the reflected waves, the 3D representation of the scene, or
transmitting (S212), using a communication module (112), data relating to the received reflected waves to a remote device (120) or server (122) configured to generate a 3D representation of the scene, **characterised in that**
the actuation module (114) comprises at least one shape memory alloy, SMA, actuator wire (1206a,b).

9. The method as claimed in claim 8, further comprising:

receiving, by the at least one processor (102), information indicating changes in position and/or orientation of the apparatus (100) relative to one or more objects (300) in the scene;
where the step of generating a control signal comprises using the received changes in position and/or orientation.

10. The method as claimed in claim 8 or 9, wherein the emitter (304) emits (S1000) a dot pattern of light with a mean interdot spacing, the method further comprising:

moving (S1004) one or more components of the apparatus (100) used to generate and emit the dot pattern of light to at least two distinct positions;
and
receiving (S1006) a reflected dot pattern from the scene at the at least two distinct positions, and optionally combining (S1010) the received reflected dot patterns to generate the 3D representation of the scene, and optionally the step of moving (S1040) one or more components of the apparatus (100) comprises moving the one or more components by half the mean interdot spacing to reach each distinct position.

11. The method as claimed in claim 10, wherein the receiver (306) discards one or more frames captured while the one or more components are being moved to the at least two distinct positions.

12. The method as claimed in claims 10 or 11, wherein the one or more components are sequentially moved to four predefined distinct positions, and receiving a reflected dot pattern from the scene at the four distinct positions for generating a 3D representation of the scene.

13. A system for generating a three-dimensional representation of a scene comprising:

an apparatus (100) as recited in any of claims 1 to 6, the apparatus (100) configured to transmit data relating to the received reflected waves for generating a three-dimensional, 3D, representation of the scene; and
a remote apparatus (120) or remote server (122) for receiving the data relating to the received reflected waves and for generating the 3D representation of the scene.


**Patentansprüche**

1. Einrichtung (100) zum Erzeugen einer dreidimensionalen Darstellung einer Szene, wobei die Einrichtung (100) umfasst:

ein Sensormodul (104), umfassend:

einen Strahler (304) zum Ausstrahlen einer Mehrzahl von Wellen; und

einen Empfänger (306) zum Empfangen von reflektierten Wellen, die durch ein oder mehrere Objekte (300) in der Szene zum Erzeugen einer dreidimensionalen, 3D-, Darstellung der Szene reflektiert werden;

wenigstens ein Betätigungsmodul (114) zum Steuern einer oder beider einer Position oder Ausrichtung einer oder mehrerer Komponenten der Einrichtung (100); und

wenigstens einen Prozessor (102) zum Erzeugen eines Steuersignals für das Betätigungsmodul (114) zum Anpassen der Position und/oder der Ausrichtung einer oder mehrerer Komponenten der Einrichtung (100), wobei der wenigstens eine Prozessor (102) dazu konfiguriert ist, unter Verwendung der reflektierten Wellen die 3D-Darstellung der Szene zu erzeugen, oder wobei die Einrichtung (100) ferner ein Kommunikationsmodul (112) zum Übertragen von Daten, die sich auf die empfangenen reflektierten Wellen beziehen, an eine entfernte Vorrichtung (120) oder einen entfernten Server (122) umfasst, die/der dazu konfiguriert sind, die 3D-Darstellung der Szene zu erzeugen, **dadurch gekennzeichnet, dass** das Betätigungsmodul (114) wenigstens einen Formgedächtnislegierungsaktuatordraht, SMA-Aktuatordraht, (1206a, b) umfasst.

2. Einrichtung (100) nach Anspruch 1, ferner umfassend wenigstens einen Sensor (128) zum Erfassen von Änderungen der Position und/oder Ausrichtung der Einrichtung (100) relativ zu einem oder mehreren Objekten (300) in der Szene, wobei der wenigstens eine Sensor (128) ein Gyroskop oder ein Beschleunigungsmesser ist und optional der wenigstens eine Prozessor (102) das Steuersignal unter Verwendung der Änderungen der relativen Position und/oder Ausrichtung, die von dem wenigstens einen Sensor (128) erfasst werden, erzeugt.

3. Einrichtung (100) nach einem der vorhergehenden Ansprüche, wobei das Betätigungsmodul (114) die Position oder Ausrichtung des Strahlers (304) und/oder die Position oder Ausrichtung des Empfängers (306) steuert.

4. Einrichtung (100) nach einem der Ansprüche 1 bis 3, wobei der Strahler (304) einen Schallwellenstrahler zum Ausstrahlen einer Mehrzahl von Schallwellen umfasst und optional einen Schallsensor oder ein Mikrofon umfasst.

5. Einrichtung (100) nach einem der Ansprüche 1 bis 3, wobei der Strahler (304) eine Quelle für elektromagnetische Strahlung und wenigstens eine optische Komponente (1208) umfasst, und wobei das Betätigungsmodul (114) die Position oder Ausrichtung von einem oder beiden der Quelle und der wenigstens einen optischen Komponenten (1208) steuert, und optional die Quelle für die elektromagnetische Strahlung wenigstens einen Laser umfasst, und optional die wenigstens eine optische Komponente (1208) eines ist von: einer Linse, einem beugenden optischen Element, einem Filter, einem Prisma, einem Spiegel, einem reflektierenden optischen Element, einem polarisierenden optischen Element, einem dielektrischen Spiegel, einem Metallspiegel, einem Strahlteiler, einem Gitter, einer strukturierten Platte, einem Netz und einem Beugungsnetz, und optional der Empfänger eines ist von: einem Lichtsensor, einem Fotodetektor, einem komplementären Metall-Oxid-Halbleiterbildsensor, CMOS-Bildsensor, einem aktiven Pixelsensor und einem ladungsgekoppelten Bauelement, CCD.

6. Einrichtung (100) nach Anspruch 5, wobei die von dem Strahler (304) ausgestrahlte elektromagnetische Strahlung ein Muster aus strukturierter elektromagnetischer Strahlung ist.

7. Verwendung einer Einrichtung (100) nach einem der Ansprüche 1 bis 6 für die Gesichtserkennung und/oder erweiterte Realität und/oder eines oder mehrere von: Bildaufnahme, Bildanzeige oder -projektion, Objekterkennung, biometrischer Erkennung, biometrischer Authentifizierung, virtueller Realität, 3D-Erfassung, Tiefenabbildung, Vermessung aus der Luft, terrestrischer Vermessung, Vermessung im oder aus dem Weltraum, hydrographischer Vermessung, Unterwasservermessung, LIDAR, Szenenerkennung, Kollisionswarnung, fortschrittlichen Fahrerassistenzsystemen, Spielen, Gestensteuerung, Gestenerkennung, robotischer Vorrichtungen, robotischer Vorrichtungssteuerung, Hausautomatisierung, Sicherheit und berührungsloser Technologie.

8. Verfahren zum Erzeugen einer dreidimensionalen Darstellung einer Szene unter Verwendung einer Einrichtung (100), wobei das Verfahren umfasst:

Ausstrahlen (S200), unter Verwendung eines Strahlers (304) der Einrichtung (100), einer Mehrzahl von Wellen;

Empfangen (S202), unter Verwendung eines Empfängers (306) der Einrichtung (100), von reflektierten Wellen, die von einem oder mehreren Objekten (300) in der Szene zum Erzeugen einer dreidimensionalen, 3D-, Darstellung der Szene reflektiert werden;

Erzeugen (S206) unter Verwendung wenigstens eines Prozessors (102) der Einrichtung (100) eines Steuersignals für wenigstens ein Betätigungsmodul (114) zum Anpassen der Position und/oder der Ausrichtung einer oder mehrerer Komponenten der Einrichtung ;

Steuern (S208) unter Verwendung des Betätigungsmoduls (114) der Einrichtung einer oder beider einer Position oder einer Ausrichtung einer oder mehrerer Komponenten der Einrichtung;

Erzeugen (S210) unter Verwendung des wenigstens einen Prozessors (102) und der reflektierten Wellen der 3D-Darstellung der Szene, oder

Übertragen (S212) unter Verwendung eines Kommunikationsmoduls (112) von Daten, die sich auf die empfangenen reflektierten Wellen beziehen, an eine entfernte Vorrichtung (120) oder einen entfernten Server (122), die/der dazu konfiguriert sind, die 3D-Darstellung der Szene zu erzeugen, **dadurch gekennzeichnet, dass** das Betätigungsmodul (114) wenigstens einen Formgedächtnislegierungsaktuatordraht, SMA-Aktuatordraht, (1206a, b) umfasst.

9.  Verfahren nach Anspruch 8, ferner umfassend:

Empfangen durch den wenigstens einen Prozessor (102) von Informationen, die Änderungen der Position und/oder der Ausrichtung der Einrichtung (100) relativ zu einem oder mehreren Objekten (300) in der Szene anzeigen;

wobei der Schritt des Erzeugens eines Steuersignals das Verwenden der empfangenen Änderungen der Position und/oder der Ausrichtung umfasst.

10. Verfahren nach Anspruch 8 oder 9, wobei der Strahler (304) ein Punktmuster aus Licht mit einem mittleren Zwischenpunktabstand ausstrahlt (S1000), wobei das Verfahren ferner umfasst:

Bewegen (S1004) einer oder mehrerer Komponenten der Einrichtung (100), die zum Erzeugen und Ausstrahlen des Punktmusters aus Licht verwendet werden, in wenigstens zwei unterschiedliche Positionen; und

Empfangen (S1006) eines reflektierten Punktmusters von der Szene an den wenigstens zwei verschiedenen Positionen, und optional

Kombinieren (S1010) der empfangenen reflektierten Punktmuster, um die 3D-Darstellung der Szene zu erzeugen, und wobei optional der Schritt des Bewegens (S1040) einer oder mehrerer Komponenten der Einrichtung (100) das Bewegen der einen oder der mehreren Komponenten um die Hälfte des mittleren Zwischenpunktabstands umfasst, um jede unterschiedliche Position zu erreichen.

11. Verfahren nach Anspruch 10, wobei der Empfänger (306) ein oder mehrere Einzelbilder verwirft, die aufgenommen wurden, während die eine oder die mehreren Komponenten zu den wenigstens zwei unterschiedlichen Positionen bewegt werden.

12. Verfahren nach Anspruch 10 oder 11, wobei die eine oder die mehreren Komponenten sequenziell in vier vordefinierte unterschiedliche Positionen bewegt werden und ein reflektiertes Punktmuster von der Szene an den vier verschiedenen Positionen zum Erzeugen einer 3D-Darstellung der Szene empfangen wird.

13. System zum Erzeugen einer dreidimensionalen Darstellung einer Szene, umfassend:

eine Einrichtung (100) nach einem der Ansprüche 1 bis 6, wobei die Einrichtung (100) dazu konfiguriert ist, Daten, die sich auf die empfangenen reflektierten Wellen beziehen, zum Erzeugen einer dreidimensionalen, 3D-, Darstellung der Szene zu übertragen; und

eine entfernte Einrichtung (120) oder einen entfernten Server (122) zum Empfangen der Daten, die sich auf die empfangenen reflektierten Wellen beziehen, und zum Erzeugen der 3D-Darstellung der Szene.

**Revendications**

1.  Appareil (100) permettant de générer une représentation tridimensionnelle d'une scène, l'appareil (100) comprenant :

un module de détection (104) comprenant :

un émetteur (304) destiné à émettre une pluralité d'ondes, et
un récepteur (306) destiné à recevoir des ondes réfléchies par un ou plusieurs objets (300) présents dans la scène pour générer une représentation tridimensionnelle (3D) de la scène ;

au moins un module de commande (114) destiné à commander la position et/ou l'orientation d'un ou plusieurs des composants de l'appareil (100) ; et

au moins un processeur (102) destiné à générer un signal de commande destiné au module de commande (114) et destiné à ajuster la position et/ou l'orientation d'un ou plusieurs composants de l'appareil (100), l'au moins un processeur (102) étant configuré pour générer, au moyen des ondes réfléchies, la représentation 3D de la scène, ou l'appareil (100) comprenant en outre un module de communication (112) destiné à transmettre des données relatives aux ondes réfléchies reçues à destination d'un dispositif (120) ou d'un serveur (122) à distance configuré pour générer la représentation 3D de la scène ;

**caractérisé en ce que** le module de commande (114) comprend au moins un fil actionneur en alliage de mémoire de forme (AMF) (1206a,b).

2. Appareil (100) selon la revendication 1, comprenant en outre au moins un détecteur (128) destiné à détecter des changements de position et/ou d'orientation de l'appareil (100) par rapport à un ou plusieurs objets (300) présents dans la scène, l'au moins un détecteur (128) étant un gyroscope ou un accéléromètre, et l'au moins un processeur (102) générant éventuellement le signal de commande au moyen des changements de position et/ou d'orientation relatives détectés par l'au moins un détecteur (128).

3. Appareil (100) selon l'une quelconque des revendications précédentes, dans lequel le module de commande (114) commande la position ou l'orientation de l'émetteur (304) et/ou la position ou l'orientation du récepteur (306).

4. Appareil (100) selon l'une quelconque des revendications 1 à 3, dans lequel l'émetteur (304) comprend un émetteur d'onde sonore destiné à émettre une pluralité d'ondes sonores, et comprend éventuellement un capteur de son ou un microphone.

5. Appareil (100) selon l'une quelconque des revendications 1 à 3, dans lequel l'émetteur (304) comprend une source de rayonnement électromagnétique et au moins un composant optique (1208), et dans lequel le module de commande (114) commande la position ou l'orientation de la source et/ou de l'au moins un composant optique (1208), et la source de rayonnement électromagnétique comprend éventuellement au moins un laser, et l'au moins un composant optique (1208) est éventuellement un composant parmi : une lentille, un élément optique diffractif, un filtre, un prisme, un miroir, un élément optique réfléchissant, un élément optique polarisant, un miroir diélectrique, un miroir métallique, un diviseur de faisceau, une grille, une plaque texturée, un réseau, et un réseau de diffraction, et le récepteur est éventuellement un élément parmi : un capteur de lumière, un photodétecteur, un semi-conducteur à oxyde de métal complémentaire (CMOS), un capteur d'image, un capteur à pixels actifs, et un dispositif à transfert de charge (CDD).

6. Appareil (100) selon la revendication 5, dans lequel le rayonnement électromagnétique émis par l'émetteur (304) est un motif de rayonnement électromagnétique structuré.

7. Utilisation d'un appareil (100) selon l'une quelconque des revendications 1 à 6 à des fins de reconnaissance faciale et/ou réalité augmentée et/ou une ou plusieurs des fins suivantes : la capture d'image, la projection ou l'affichage d'images, la reconnaissance d'objet, la reconnaissance biométrique, l'authentification biométrique, la réalité virtuelle, la captation 3D, la cartographie de profondeur, les relevés aériens, les relevés terrestres, les relevés dans ou depuis l'espace, les relevés hydrographiques, les relevés sous-marins, le LIDAR, la détection de scène, l'avertissement de collision, les systèmes d'aide à la conduite, le jeu, la commande gestuelle, la reconnaissance gestuelle, les dispositifs robotisés, la commande de dispositifs robotisés, la domotique, les technologies de la sécurité et sans contact.

8. Procédé de génération d'une représentation tridimensionnelle d'une scène au moyen d'un appareil (100), le procédé comprenant les étapes consistant à :

émettre (S200), au moyen d'un émetteur (304) de l'appareil (100), une pluralité d'ondes,

recevoir (S202), au moyen d'un récepteur (306) de l'appareil (100), des ondes réfléchies par un ou plusieurs objets (300) présents dans la scène pour générer une représentation tridimensionnelle (3D) de la scène,

générer (S206), au moyen d'au moins un processeur (102) de l'appareil (100), un signal de commande destiné à au moins un module de commande (114) et destiné à ajuster la position et/ou l'orientation d'un ou plusieurs composants de l'appareil,

commander (S208), au moyen d'un module de commande (114) de l'appareil, la position et/ou l'orientation d'un ou plusieurs composants de l'appareil, et

générer (S210), au moyen de l'au moins un processeur (102) et des ondes réfléchies, la représentation 3D de la scène, ou

transmettre (S212), au moyen d'un module de communication (112), des données relatives aux ondes réfléchies reçues à destination d'un dispositif (120) ou d'un serveur (122) à distance configuré pour générer une représentation 3D de la scène ;

**caractérisé en ce que** le module de commande (114) comprend au moins un fil actionneur en alliage de mémoire de forme (AMF) (1206a,b).

9. Procédé selon la revendication 8, comprenant en outre l'étape consistant à :

recevoir, par l'au moins un processeur (102), des informations indiquant des changements de position et/ou d'orientation de l'appareil (100) relatifs à un ou plusieurs objets (300) présents dans la scène ; ladite étape de génération d'un signal de commande comprenant l'utilisation des changements de position et/ou d'orientation reçus.

10. Procédé selon la revendication 8 ou 9, dans lequel l'émetteur (304) émet (S1000) un motif de lumière à points avec un espacement inter-point moyen, le procédé comprenant en outre les étapes consistant à :

déplacer (S1004), en au moins deux positions distinctes, un ou plusieurs composants de l'appareil (100) servant à générer et émettre le motif de lumière à points, et recevoir (S1006) un motif à points réfléchi provenant de la scène aux au moins deux positions distinctes, et éventuellement combiner (S1010) les motifs à points réfléchis pour générer la représentation 3D de la scène ; l'étape de déplacement (S1040) du ou des composants de l'appareil (100) comprenant éventuellement le déplacement du ou des composants de la moitié d'un espacement inter-point moyen pour atteindre chaque position distincte.

11. Procédé selon la revendication 10, dans lequel le récepteur (306) rejette une ou plusieurs images capturées pendant que le ou les composants sont déplacés vers les au moins deux positions distinctes.

12. Procédé selon la revendication 10 ou 11, comprenant le déplacement successif du ou des composants vers quatre positions distinctes prédéfinies, et la réception d'un motif à points réfléchi depuis la scène aux quatre positions distinctes pour générer une représentation 3D de la scène.

13. Système de génération d'une représentation tridimensionnelle d'une scène comprenant :

un appareil (100) selon l'une quelconque des revendications 1 à 6, l'appareil (100) étant conçu pour transmettre des données relatives aux ondes réfléchies reçues pour générer une représentation tridimensionnelle (3D) de la scène, et un appareil à distance (120) ou un serveur à distance (122) destiné à recevoir les données relatives aux ondes réfléchies reçues et à générer la représentation 3D de la scène.

FIG. 1

```
┌─────────────────────────────────────┐
│      Emit a plurality of waves S200  │◄─────┐
└─────────────────────────────────────┘      │
                  │                           │
                  ▼                           │
┌─────────────────────────────────────┐      │
│      Receive reflected waves S202    │      │
└─────────────────────────────────────┘      │
                  │                           │
                  ▼                           │
              ╱─────────╲                     │
       no    ╱  Has location/ ╲               │
    ◄───────╱   orientation of  ╲             │
            ╲    apparatus      ╱             │
             ╲  changed? S204  ╱              │
              ╲───────────────╱               │
                  │                           │
                 yes                          │
                  ▼                           │
┌─────────────────────────────────────┐      │
│      Generate a control signal for   │      │
│  adjusting position/orientation of   │      │
│    apparatus component S206          │      │
└─────────────────────────────────────┘      │
                  │                           │
                  ▼                           │
┌─────────────────────────────────────┐      │
│   Control position/orientation of    │──────┘
│    apparatus component S208          │
└─────────────────────────────────────┘
```

┌ ─ ─ ─ ─ ─ ─ ─ ─ ─ ─ ─ ┐   ┌ ─ ─ ─ ─ ─ ─ ─ ─ ─ ─ ─ ┐
  Optional: generate 3D         Optional: transmit data to
  representation of scene S210   remote device/server S212
└ ─ ─ ─ ─ ─ ─ ─ ─ ─ ─ ─ ┘   └ ─ ─ ─ ─ ─ ─ ─ ─ ─ ─ ─ ┘

*FIG. 2*

22

300

304

306

b

302

FIG. 3

FIG. 4

Final dot pattern

- Original pattern
- 1st iteration
- 2nd iteration
- 3rd iteration

Y offset (fraction of mean dot spacing)

X offset (fraction of mean dot spacing)

*FIG. 5*

Final dot pattern

FIG. 6

Mean paths - first iteration

*FIG. 7A*

Median paths - first iteration

*FIG. 7B*

EP 3 775 766 B1

Mean paths - second iteration

FIG. 8A

EP 3 775 766 B1

Median paths - second iteration

FIG. 8B

Mean paths - third iteration

Y offset (fraction of mean dot spacing)

X offset (fraction of mean dot spacing)

*FIG. 9A*

3.4
3.3
3.2
3.1
3
2.9
2.8
2.7
2.6
2.5

Median paths - third iteration

X offset (fraction of mean dot spacing)

*FIG. 9B*

Emit a dot pattern S1000

Receive reflected dot pattern S1002

Move position of apparatus
component S1004

Receive reflected dot pattern S1006

All exposures
obtained for depth
map? S1008

no

yes

Optional: combine exposures
to generate 3D representation
of scene S1010

Optional: transmit exposures
to remote device/server
S1012

FIG. 10

FIG. 11

**FIG. 12A**

**FIG. 12B**

FIG. 13

FIG. 14A

FIG. 14B

1500

Resonant Spring (2X)

Latch

Moving mass

FIG. 15A

1510

FIG. 15B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014104416 A
- US 9843689 B
- US 2017142406 A
- KR 101738433 B1
- WO 2007113478 A
- WO 2013175197 A
- WO 2014083318 A
- WO 2011104518 A
- US 8493496 B
- WO 2017208003 A